(19)

Europäisches Patentamt
European Patent Office
Office européen des brevets

(11) **EP 2 913 992 A2**

(12) **EUROPEAN PATENT APPLICATION**

(43) Date of publication:
02.09.2015 Bulletin 2015/36

(21) Application number: 15156300.4

(22) Date of filing: 24.02.2015

(51) Int Cl.:
*H04N 5/225* (2006.01)          *G02B 27/00* (2006.01)
*G06K 7/10* (2006.01)          *G06T 5/00* (2006.01)
*H04N 5/357* (2011.01)          *H04N 5/232* (2006.01)

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: 28.02.2014 JP 2014039912

(71) Applicant: **Ricoh Company, Ltd.**
**Tokyo 143-8555 (JP)**

(72) Inventors:
• **Kasahara, Ryosuke**
**Tokyo, 143-8555 (JP)**
• **Sawaki, Taro**
**Tokyo, 143-8555 (JP)**

(74) Representative: **Schwabe - Sandmair - Marx**
**Patentanwälte**
**Stuntzstraße 16**
**81677 München (DE)**

(54) **Image capturing apparatus, image capturing system, and image capturing method**

(57)    An image capturing apparatus (1) comprises: an optical system (11) that imparts aberration to incident light; an image capturing unit (12) that transforms the light having passed through the optical system (11) to pixels and captures an image; and an inverse transforming unit (14) that performs inverse transform processing on a captured image captured by the image capturing unit (12) in a given range on an optical axis of the optical system (11) by an inverse transform filter (121) that restores the aberration so as to extend a depth of field, wherein the optical system (11) and the image capturing unit (12) are disposed to form an in-focus plane (50) with an in-focus position stretched in a direction of the optical axis, and the inverse transforming unit (14) extends the depth of field at each position of the in-focus plane (50).

FIG.20

EP 2 913 992 A2

**Description**

BACKGROUND OF THE INVENTION

1. Field of the Invention

The present invention relates to an image capturing apparatus, an image capturing system, and an image capturing method.

2. Description of the Related Art

In recent years, along with the advancement in digitization of information, the advancement of digitization in the field of image capturing apparatuses has been remarkable. In particular, in the image capturing apparatuses represented by digital cameras, a solid imaging element has been used for an imaging plane in place of a conventional film. A charge coupled device (CCD) sensor or a complementary metal-oxide semiconductor (CMOS) sensor, for example, is used as the solid imaging element (hereinafter, simply referred to as an imaging element).

Thus, an image capturing apparatus using an imaging element is what takes light from a subject with an optical system and extracts the light by transforming it into an electrical signal. Such image capturing apparatuses include, for example, other than digital cameras, video cameras, code readers (barcode readers, two-dimensional code readers, and others), cellular phones, hand-held terminals (personal digital assistants (PDAs)), and industrial cameras.

As image capturing apparatuses provided with an imaging element such a CCD or CMOS, developed has been an image capturing apparatus that uses a multifocal optical system to stretch the position being in focus on a subject side (hereinafter, referred to as an in-focus position) in the optical axis direction of the optical system so as to extend the readable range of the subject (such as a barcode) (see Japanese Laid-open Patent Publication No. 2010-152881). The image capturing apparatus disclosed in Japanese Laid-open Patent Publication No. 2010-152881 reads a subject (such as a barcode) at high speed by using the multifocal optical system without using an auto-focusing mechanism that is slow to operate.

The image capturing apparatus described in Japanese Laid-open Patent Publication No. 2010-152881 stretches the in-focus position in the optical axis direction of the optical system by the optical system. However, due to the limitation in the depth of field at each in-focus position, there has been a drawback in that it is not possible to capture an image of a large-sized subject being in focus overall.

In view of the above-described conventional problem, there is a need to provide an image capturing apparatus, an image capturing system, and an image capturing method that can capture an image of a subject having a given size being in focus.

SUMMARY OF THE INVENTION

It is an object of the present invention to at least partially solve the problems in the conventional technology.

According to the present invention, there is provided an image capturing apparatus comprising: an optical system that imparts aberration to incident light; an image capturing unit that transforms the light having passed through the optical system to pixels and captures an image; and an inverse transforming unit that performs inverse transform processing on a captured image captured by the image capturing unit in a given range on an optical axis of the optical system by an inverse transform filter that restores the aberration so as to extend a depth of field, wherein the optical system and the image capturing unit are disposed to form an in-focus plane with an in-focus position stretched in a direction of the optical axis, and the inverse transforming unit extends the depth of field at each position of the in-focus plane.

The present invention also provides an image capturing system comprising: the above-described image capturing apparatus; and an information processing apparatus that comprises: a communication unit that receives an output image on which the inverse transform processing is performed from the image capturing apparatus, and a display unit that displays the output image.

The present invention also provides an image capturing system comprising: the above-described image capturing apparatus; and a recognition processing unit that recognizes a code in which information is encoded in a given method, based on an output image on which the inverse transform processing is performed by the inverse transforming unit.

The present invention also provides an image capturing method for an image capturing apparatus in which an optical system and an image capturing unit are disposed to form an in-focus plane with an in-focus position stretched in an optical axis direction of the optical system, the image capturing method comprising: optical-processing by the optical system to impart aberration to incident light; image-capturing by the image capturing unit to transform the light having passed through the optical system and to capture an image; and inverse-transforming to perform inverse transform processing on a captured image captured in a given range on an optical axis of the optical system by an inverse transform filter that restores the aberration so as to extend a depth of field at each position of the in-focus plane.

The above and other objects, features, advantages and technical and industrial significance of this invention will be better understood by reading the following detailed description of presently preferred embodiments of the invention, when considered in connection with the accompanying drawings.

BRIEF DESCRIPTION OF THE DRAWINGS

FIG. 1 is a block diagram illustrating one example of the overall configuration of an image capturing system according to a first embodiment of the present invention;

FIG. 2 is a block diagram illustrating one example of the hardware configuration of an information processing apparatus in the first embodiment;

FIG. 3 is a block diagram illustrating one example of the configuration of an image capturing apparatus in the first embodiment;

FIG. 4 is a diagram for explaining whether a subject is in focus by the distance to the subject;

FIG. 5 is a diagram for explaining the Scheimpflug principle;

FIG. 6 is a diagram for explaining an in-focus plane stretched in the optical axis direction of a lens unit by the Scheimpflug principle;

FIG. 7 is a diagram for explaining whether a captured image is in focus by the position of the captured image;

FIG. 8 is a diagram illustrating one example of the configuration of a relevant portion in a periphery of an optical system of the image capturing apparatus in the first embodiment;

FIG. 9 is a block diagram illustrating one example of the configuration of an image processing unit in the image capturing apparatus in the first embodiment;

FIG. 10 is a diagram illustrating one example of an image captured by an imaging element of the image capturing apparatus in the first embodiment;

FIG. 11 is a block diagram illustrating one example of the configuration of an image buffering unit of the image processing unit in the first embodiment;

FIG. 12 is a timing chart illustrating the operation of the image buffering unit to which pixels output from the imaging element are input;

FIG. 13 is a block diagram illustrating one example of the configuration of a filter processing unit of the image processing unit in the first embodiment;

FIG. 14 is a diagram illustrating one example of the configuration of an inverse transform filter;

FIG. 15 is a diagram for explaining filter processing performed on an image by the inverse transform filter;

FIG. 16 that includes parts (a) to (f) is a diagram for explaining the operation of scanning a target partial image which is the target of the filter processing performed on the image by the inverse transform filter;

FIG. 17 is a flowchart illustrating the sequence of calculating a frequency response to determine the inverse transform filter of the filter processing unit in the image processing unit in the first embodiment;

FIG. 18 is a chart illustrating spatial frequency responses of an image captured by light having passed through the optical system;

FIG. 19 that includes parts (a) and (b) is a chart illustrating the spatial frequency responses of the image on which inverse transform processing was performed;

FIG. 20 that includes parts (a) and (b) is a diagram for explaining an in-focus area formed when a depth of field is extended at each position of the in-focus plane;

FIG. 21 that includes parts (a) and (b) ise a diagram for explaining that an area on the imaging element in focus is expanded;

FIG. 22 is a diagram illustrating one example of the configuration of a relevant portion in a periphery of the optical system of the image capturing apparatus according to a modification of the first embodiment;

FIG. 23 is a diagram for explaining that a power spectrum is different depending on each area in a captured image;

FIG. 24 that includes parts (a) and (b) is a chart for explaining the power spectrum and an optimal filter of an overall captured image;

FIG. 25 that includes parts (a) and (b) is a chart for explaining the power spectrum and an optimal filter of an area in a flat portion of the captured image;

FIG. 26 that includes parts (a) and (b) is a chart for explaining the power spectrum and an optimal filter of an area in a texture portion of the captured image;

FIG. 27 is a block diagram for explaining one example of the configuration and operation of a filter processing unit of an image processing unit according to a second embodiment of the present invention;

FIG. 28 is a block diagram for explaining one example of the configuration and operation of a filter processing unit of an image processing unit according to a modification of the second embodiment;

FIG. 29 that includes parts (a) and (b) is a diagram illustrating one example of the external configuration of a code reader according to a third embodiment of the present invention; and

FIG. 30 is a diagram for explaining the position of an in-focus plane of the code reader in the third embodiment, and the operation of the code reader.

DETAILED DESCRIPTION OF THE PREFERRED EMBODIMENTS

With reference to the accompanying drawings, the following describes in detail exemplary embodiments of an image capturing apparatus, an image capturing system, and an image capturing method according to the present invention. The invention, however, is not intended to be limited by the following embodiments. The constituent elements described in the following embodiments include those that a person skilled in the art can easily perceive, that are substantially the same, and that are within the range of what is called equivalents. Furthermore, various omissions, substitutions, modifications, and combinations of the foregoing can be performed on the constituent elements without departing from the scope of the following embodiments.

First Embodiment

Overall Configuration of Image Capturing System

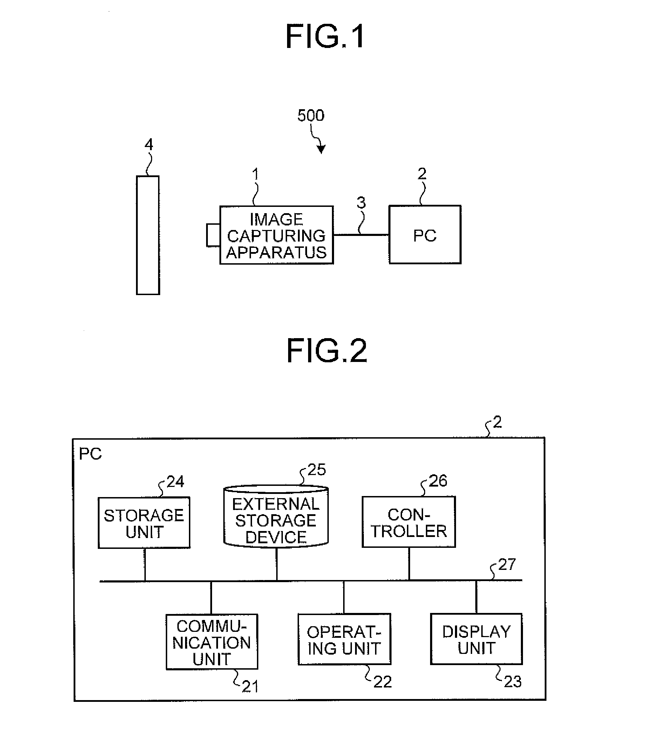

FIG. 1 is a block diagram illustrating one example of the overall configuration of an image capturing system according to a first embodiment. With reference to FIG. 1, the configuration of an image capturing system 500 in the first embodiment will be described.

As illustrated in FIG. 1, the image capturing system 500 in the first embodiment includes an image capturing apparatus 1 and a PC 2. The image capturing apparatus 1 and the PC 2 are coupled to each other so as to be able to communicate with via a communication cable 3 such as an Ethernet (registered trademark) cable.

The image capturing apparatus 1 captures an image of a subject 4 by transforming light from the subject 4 into an electrical signal, executes image processing based on the information on the captured image (hereinafter, simply referred to as a captured image), and transmits an image after the image processing to the PC 2 via the communication cable 3. The PC 2 executes given processing on the image received from the image capturing apparatus 1.

For example, the image capturing apparatus 1 captures an image of a barcode affixed to a product running on a production line, and transmits the image of the barcode to the PC 2. The PC 2 reads out and analyzes the information on the barcode from the received image.

While the image capturing system 500 is of a wired communication system in which the image capturing apparatus 1 and the PC 2 perform data communication via the communication cable 3 as illustrated in FIG. 1, it is not limited to this. For example, the image capturing apparatus 1 and the PC 2 may be able to perform data communication with each other via a wireless communication system such as wireless fidelity (Wi-Fi, registered trademark).

When the image capturing apparatus 1 and the PC 2 are used in a production line, the image capturing system 500 may be configured such that the PC 2 is coupled to a programmable logic controller (PLC) and others to be able to perform communication. In this case, the operation of the image capturing system 500 includes the following operation, as one example. The image capturing apparatus 1 captures an image of a barcode affixed to a product running on the production line, and transmits the image of the barcode to the PC 2. The PC 2 determines, from the received image of the barcode, a part number of the product running on the production line. When the determined part number disagrees with the part number of change-over in the production line, the PC 2 transmits to the PLC a signal indicating that the product corresponding to the determined part number is the product of a different part number. When the PLC receives from the PC 2 the signal indicative of the product of a different part number, the PLC controls the operation of the production line so as to remove the product from the production line.

Configuration of Information Processing Apparatus

FIG. 2 is a block diagram illustrating one example of the hardware configuration of an information processing apparatus in the first embodiment. With reference to FIG. 2, the hardware configuration of the PC 2 that is one example of the information processing apparatus will be described.

As illustrated in FIG. 2, the PC 2 that is one example of the information processing apparatus includes a communication unit 21 (communication unit), an operating unit 22, a display unit 23 , a storage unit 24, an external storage device 25, and a controller 26. The foregoing various units are coupled to one another via a bus 27 and are able to transmit and receive data between one another.

The communication unit 21 is a device that performs communication with the image capturing apparatus 1 via the communication cable 3. The communication unit 21 is implemented with a communication device such as a network interface card (NIC), for example. The communication protocol of the communication unit 21 is implemented by Transmission Control Protocol (TCP)/Internet Protocol (IP) or User Datagram Protocol (UDP)/IP, for example.

The operating unit 22 is a device on which a user performs operating input to make the controller 26 perform given processing. The operating unit 22 is implemented by an operating input function of a mouse, a keyboard, a numeric keypad, a touch pad, or a touch panel, for example.

The display unit 23 is a device that displays an application image and others executed by the controller 26. The display unit 23 is implemented with a cathode ray tube (CRT) display, a liquid crystal display, a plasma display, or an organic electroluminescence (EL) display, for example.

The storage unit 24 is a device that stores therein various programs executed by the PC 2, and data and others used for a variety of processing performed by the PC 2. The storage unit 24 is implemented with a storage device such as a read only memory (ROM) and a random access memory (RAM), for example.

The external storage device 25 is a storage device that accumulates and stores therein images, programs, font data, and others. The external storage device 25 is implemented with a storage device such as a hard disk drive (HDD), a solid state drive (SSD), an optical disk, a magneto-optical (MO) disk, or others, for example.

The controller 26 is a device that controls the operation of various units of the PC 2. The controller 26 is implemented with a central processing unit (CPU), an application specific integrated circuit (ASIC), and others, for example.

Configuration of Image Capturing Apparatus

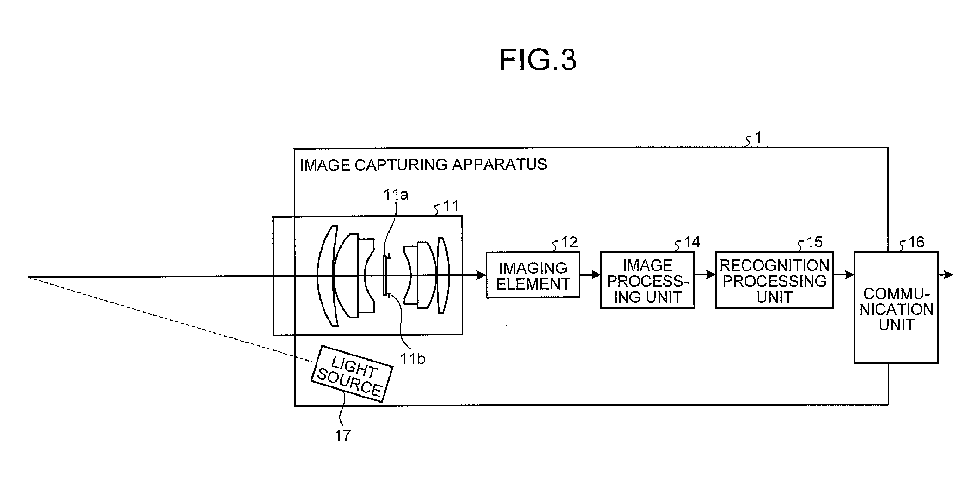

FIG. 3 is a block diagram illustrating one example of the configuration of the image capturing apparatus in the first embodiment. With reference to FIG. 3, the configuration of the image capturing apparatus 1 in the first embodiment will be described.

As illustrated in FIG. 3, the image capturing apparatus 1 includes a lens unit 11 (optical system), an imaging element 12 (image capturing unit), an image processing unit 14, a recognition processing unit 15 , a communication unit 16, and a light source 17.

The lens unit 11 is a unit that focuses light from the subject 4 and forms an image on the imaging element 12. The lens unit 11 is implemented with an optical system composed of one or more of lenses. The lens unit 11 includes a phase plate 11a and a diaphragm 11b. The subject 4 is a person, a monitoring object, a barcode, a two-dimensional code, a character string, or others, for example.

The phase plate 11a has the action of imparting aberration to the light incident on the lens unit 11. As a result, the phase plate 11a acts to add a point spread function to the light that is incident on the imaging element 12, and while the image captured by the imaging element 12 is in a blurred state, the blur is made to be in a certain degree in a wide depth of field. What imparts the aberration to the light that is incident on the lens unit 11 is not limited to the phase plate 11a, and the aberration may be imparted by the lens included in the lens unit 11.

The diaphragm 11b is a member that freely adjusts the amount of light incident on the lens unit 11, and is disposed near the phase plate 11a.

The imaging element 12 is a solid imaging element that captures and generates an image of the subject 4 by transforming the light that is from the subject and incident on the lens unit 11 into an electrical signal. The imaging element 12 outputs pixels that constitute the captured image by the respective units of detection that constitute the solid imaging element. The imaging element 12 is implemented with a CCD sensor, a CMOS sensor, or the like, for example.

The image processing unit 14 generates an image (output image), on which filter processing has been performed, from the captured image output from the imaging element 12.

The recognition processing unit 15 performs recognition processing in which a given target object is recognized based on the image on which the filter processing has been performed by the image processing unit 14. The given target object is a person, a monitoring object, a barcode, a two-dimensional code, a character string, or others, for example.

The communication unit 16 is a device that performs communication with the PC 2 via the communication cable 3. The communication unit 16 transmits, to the PC 2, an image output from the recognition processing unit 15, for example. The communication unit 16 is implemented with communication device such as a NIC, for example. The communication protocol of the communication unit 16 is implemented by TCP/IP, UDP/IP, or others, for example.

The light source 17 is a light source that is installed such that an emitted light beam lies along an in-focus plane that is stretched in the optical axis direction of the lens unit 11 by the imaging element 12 with a tilted (inclined) sensor surface (detection plane) which will be described later. The light source 17 is a light emitting device such as a light emitting diode (LED), a laser, or others.

While the recognition processing unit 15 is configured to be included in the image capturing apparatus 1, it may be implemented by the function of an external device coupled to the image capturing apparatus 1. For example, the recognition processing unit 15 may be implemented not with the image capturing apparatus 1 but with the PC 2.

The image processing unit 14 and the recognition processing unit 15 may be implemented by executing a program that is software, or may be implemented by a hardware circuit. In the following description, however, the image processing unit 14 in particular is exemplified to be configured by a hardware circuit.

Scheimpflug Principle

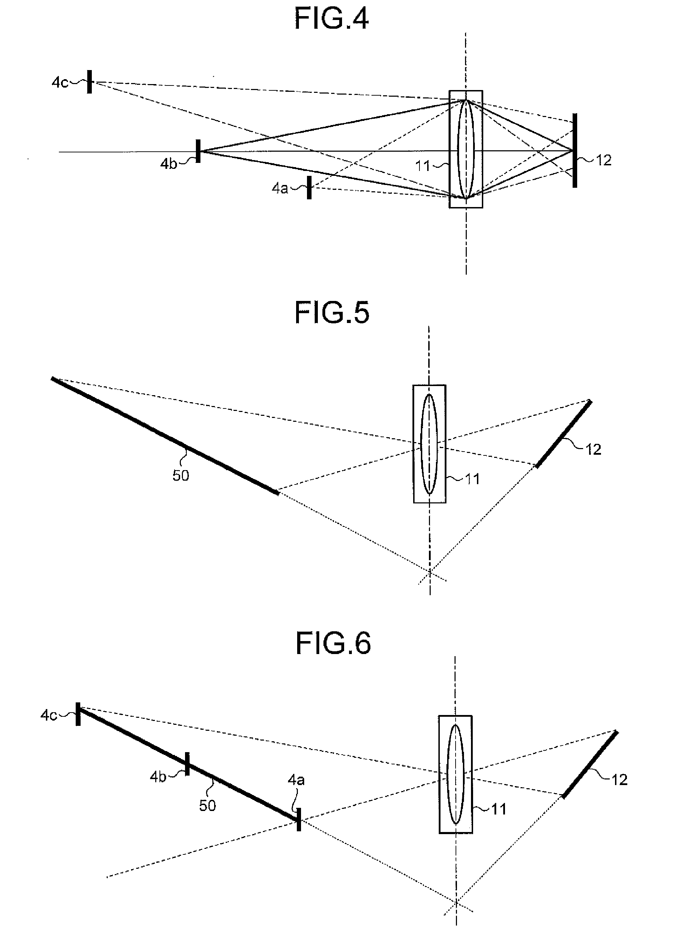

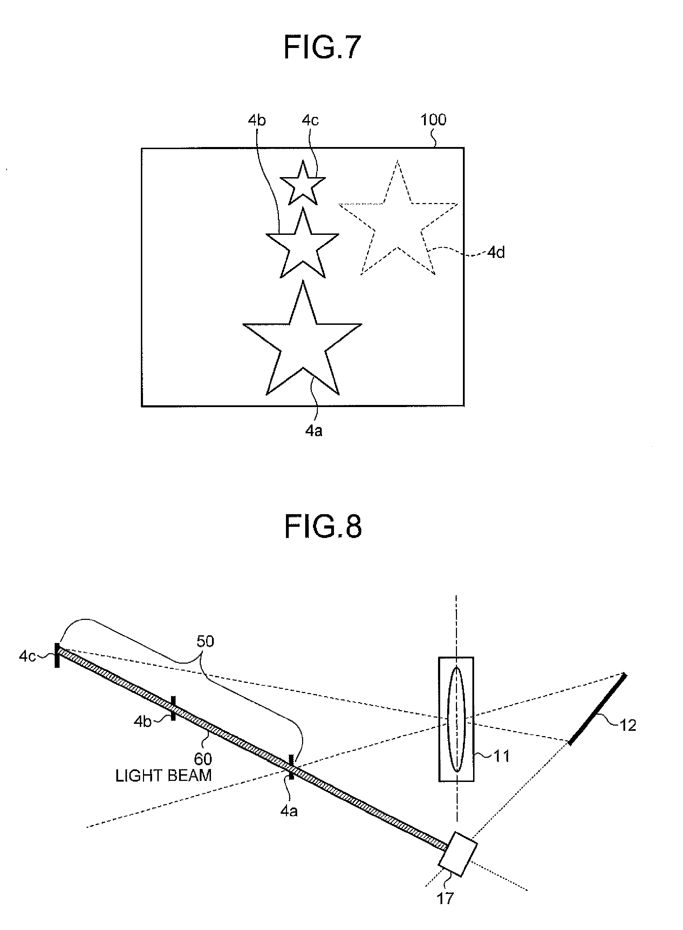

FIG. 4 is a diagram for explaining whether or not a subject is in focus by the distance to the subject. FIG. 5 is a diagram for explaining the Scheimpflug principle. FIG. 6 is a diagram for explaining an in-focus plane stretched in the optical axis direction of a lens unit by the Scheimpflug principle. FIG. 7 is a diagram for explaining whether or not a captured image is in focus by the position of the captured image. With reference to FIGS. 4 to 7, the Scheimpflug principle that the image capturing apparatus 1 in the first embodiment employs will be described.

As illustrated in FIG. 4, typically, a plane (principle surface) perpendicular to the optical axis of the lens unit 11 in the image capturing apparatus and the sensor surface of the imaging element 12 are disposed to be approximately parallel to each other. The lens unit 11 that is an optical system has a given depth of field, and at the points other than the focal point included in the depth of field, a subject is not in focus (not focused). The depth of field means a range of distance in the optical axis direction of the optical system, in which it is tolerable that a subject at a given distance from the optical system of the image capturing apparatus is in focus. Of the three subjects 4a to 4c illustrated in FIG. 4, only the subject 4b is at an in-focus position at which it is in focus, and the subjects 4a and 4c are not at the in-focus position. Consequently, the image focused on the imaging element 12 is only the subject 4b, and the images of the subjects 4a and 4c are not focused on the imaging element 12.

Due to this, generally, to support such a wide range of in-focus position (focus position), a method such as autofocusing that mechanically changes the position of the lens is used. The auto-focusing mechanism, however, becomes large in size and is expensive. Furthermore, there is a drawback that it is necessary to move the lens to search for the in-focus position to make it focus and it takes time until an image of a subject being in focus is obtained.

As one example of a method to solve this, as illustrated in FIG. 5, there is a method that uses the Scheimpflug principle in which the sensor surface of the imaging element 12 is tilted with respect to the principle surface of the lens unit 11. The Scheimpflug principle is a principle in which, as illustrated in FIG. 5, when the sensor surface of the imaging element 12 and the principle surface of the lens unit 11 intersect with a single line, a plane to be in focus on the subject side (hereinafter, referred to as an in-focus plane 50) also intersects with the same line. That is, the in-focus position on the subject side is to change depending on the position of the imaging element 12, and by arranging a subject at an appropriate place corresponding to the distance to the subject, i.e., on the in-focus plane 50, a captured image that is in focus in a wide range in the optical axis direction of the lens unit 11 can be obtained.

Thus, by using the Scheimpflug principle and tilting the sensor surface of the imaging element 12 with respect to the principle surface of the lens unit 11, the in-focus plane 50 for which the in-focus position is stretched in the optical axis direction of the lens unit 11 can be formed. In this case, as illustrated in FIG. 6, when an image is captured by the imaging element 12 while the subjects 4a to 4c are placed on the in-focus plane 50, a captured image in which any of the subjects 4a to 4c are in focus can be obtained.

However, when the in-focus position in the optical axis direction of the lens unit 11 is stretched by using the Scheimpflug principle illustrated in FIG. 6, an appropriate image capturing position at which the subject in the captured image is displayed in focus changes depending on the distance to the subject. Thus, a problem arises in that, because the user needs to move the image capturing apparatus 1 to be at the appropriate image capturing position according to the distance to the subject, it is not easy to determine the image capturing position of the subject. For example, as illustrated in FIG. 7, of subjects 4a to 4d of the same size and shape included in a captured image 100, the subjects 4a to 4c are captured in an in-focus state because they are placed on the in-focus plane 50. In this case, the subject 4a is placed at a position close to the image capturing apparatus 1 on the in-focus plane 50, the subject 4c is placed at a position away from the image capturing apparatus 1 on the in-focus plane 50, and the subject 4b is placed at an intermediate position between the subject 4a and the subject 4c on the in-focus plane 50. However, the subject 4d is captured in an out-of-focus state because the subject 4d is not placed on the in-focus plane 50 although the subject 4d is placed at the same distance as the subject 4a is from the image capturing apparatus 1. Consequently, to capture the subject 4d in an in-focus state, the user needs to move the image capturing apparatus 1 such that the image capturing position of the subject 4d is to be the image capturing position of the subject 4a in FIG. 7. However, it cannot be done so easily. With reference to FIG. 8, the following describes the configuration of a relevant portion in the periphery of the lens unit 11 in the first embodiment to solve this problem.

Configuration of Relevant Portion in Periphery of Lens Unit

FIG. 8 is a diagram illustrating one example of the configuration of a relevant portion in the periphery of the optical system of the image capturing apparatus in the first embodiment. With reference to FIG. 8, the configuration of the relevant portion in the periphery of the lens unit 11 of the image capturing apparatus 1 will be described.

As illustrated in FIG. 8, the imaging element 12 is disposed such that the sensor surface of the imaging element 12 is tilted with respect to the principle surface of the lens unit 11, and by the Scheimpflug principle, the in-focus plane 50 for which the in-focus position is stretched in the optical axis direction of the lens unit 11 is formed. That is, the in-focus plane 50 is formed based on the optical characteristics of the lens unit 11 and the positional relation of the lens unit 11 and the sensor surface (image surface) of the imaging element 12. Furthermore, the light source 17 is disposed at a position of the line with which the sensor surface of the imaging element 12 and the principle surface of the lens unit 11 intersect. The light source 17 emits a light beam 60 such that the direction of the light beam 60 emitted is displaced from the central axis direction of the angle of view of the lens unit 11 and the light beam 60 is positioned on the in-focus plane 50. The light beam 60 may be configured to form a round-shaped pointer or to form a rectangular-shaped pointer when a subject is irradiated with it.

By disposing the light source 17 in the foregoing manner, the light beam 60 emitted from the light source 17 is delivered to the subject placed on the in-focus plane 50. As illustrated in FIG. 8, because any of the subjects 4a to 4c are placed on the in-focus plane 50, the subjects 4a to 4c are to be irradiated with the light beam 60. Conversely, by moving the subject or the image capturing apparatus 1 such that the subject is irradiated with the light beam 60, the subject can be placed at the image capturing position to be in focus. That is, by moving the image capturing apparatus 1 such that a subject (for example, a two-dimensional code) is placed at the position indicated by the light beam 60 emitted from the light source 17, the user can easily define an appropriate image capturing position corresponding to the distance to the subject and can obtain a captured image in which the subject is in focus.

When the surface of a subject with respect to the image capturing apparatus 1 is placed approximately parallel to the principle surface of the lens unit 11, the light beam 60 emitted from the light source 17 is delivered to the surface of the subject at an angle. Thus, the pointer of the light beam 60 delivered to the subject has a deformed shape. Consequently, the light source 17 may be configured to emit the light beam 60 such that the light beam 60 has a deformed cross section from the beginning, and has a normal shape (such as a round shape and a rectangular shape) when the surface of the subject is irradiated with the light beam at an angle.

The sensor surface of the imaging element 12 typically has a rectangular shape. For example, the imaging element 12 is composed of detection elements arranged in a matrix of 640 by 480. In this case, it is preferable that the imaging element 12 be disposed such that the longitudinal direction of the sensor surface is tilted with respect to the principle surface of the lens unit 11. This enables the in-focus plane 50 to be stretched greater in the optical axis direction of the lens unit 11.

While the light source 17 is exemplified to be disposed at a position of the line with which the sensor surface of the imaging element 12 and the principle surface of the lens unit 11 intersect, it is not limited to this. That is, as long as the irradiation of the light beam 60 emitted from the light source 17 is positioned on the in-focus plane 50, the light source 17 may be disposed at any position.

As in the foregoing, even when the in-focus plane 50 for which the in-focus position is stretched in the optical axis direction of the lens unit 11 is formed by using the Scheimpflug principle, the range of being in focus in the direction parallel to the principle surface of the lens unit 11 is narrow by the limitation of a given depth of field of the lens unit 11. Thus, for a subject in a size exceeding the range of being in focus in the direction parallel to the principle surface of the lens unit 11, it is not possible to capture an image in which a whole of the subject is being in focus.

If the foregoing depth of field in the optical axis direction of the lens unit 11 can be extended at each position on the in-focus plane 50, the area to be in focus is extended and an image in which the whole of a large subject is in an in-focus state can be captured. Now, the outline of extended depth of field (EDoF) will be described. The lenses and the phase plate 11a included in the lens unit 11 serve to add a point spread function (PSF) by imparting aberration to the light of the subject that is incident on the imaging element 12. For example, as the aberration, the lenses impart spherical aberration to the light of the subject that is incident on the imaging element 12. While the lens unit 11 makes the image captured by the imaging element be in a blurred state by the aberration, the blur is made to be in a certain degree in a wide depth of field. Consequently, the image blurred by the lens unit 11 needs to be corrected such that a given value of modulation transfer function (MTF) can be obtained. The MTF represents a quantified value of how faithfully the contrast of a subject can be reproduced, i.e., the reproducibility of contrast. For such an image blurred by the lens unit 11, as an image capturing apparatus that corrects such a blur, performing inverse transform processing of the point spread function can improve the MTF and can correct the image to an image of high resolution. The inverse transform processing is implemented by performing filter processing by an inverse transform filter on each pixel that forms the image blurred by the optical system, and restoring the blur (aberration) of the image. In the following description, the detail of the configuration of the image processing unit 14 will be described and one example of the method for extended depth of field (EDoF) by the inverse transform processing will be described.

Configuration and Operation of Image Processing Unit

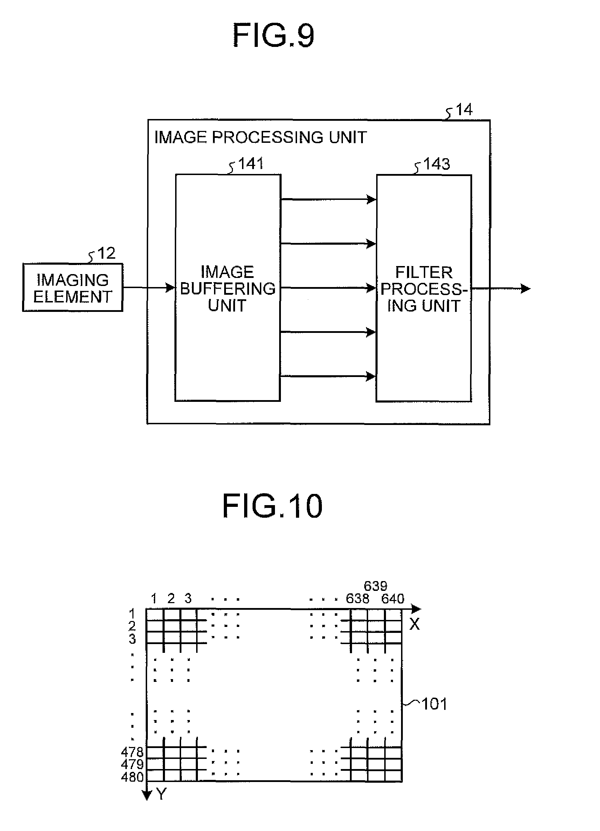

FIG. 9 is a block diagram illustrating one example of the configuration of the image processing unit of the image capturing apparatus in the first embodiment. FIG. 10 is a diagram illustrating one example of an image captured by the imaging element of the image capturing apparatus in the first embodiment. With reference to FIG. 9, the configuration of the image processing unit 14 of the image capturing apparatus 1 in the first embodiment will be described.

The imaging element 12 is, as in the foregoing, a solid imaging element that captures and generates an image of the subject 4 by transforming the light that is from the subject and incident on the lens unit 11 into an electrical signal. In the following description, the imaging element 12 is assumed to form and output an image in VGA. Specifically, as illustrated in FIG. 10, the imaging element 12 captures, with the detection elements of 640 pieces in the X direction and 480 pieces in the Y direction, a captured image 101 that is an image composed of pixels arranged in a matrix of 640 by 480, for example.

While the size of image that the imaging element 12 captures is assumed to be an image in VGA of 640 by 480, it is not limited to this and it may be an image of a different size.

As illustrated in FIG. 9, the image processing unit 14 in the first embodiment includes an image buffering unit 141 and a filter processing unit 143 (inverse transform processing unit).

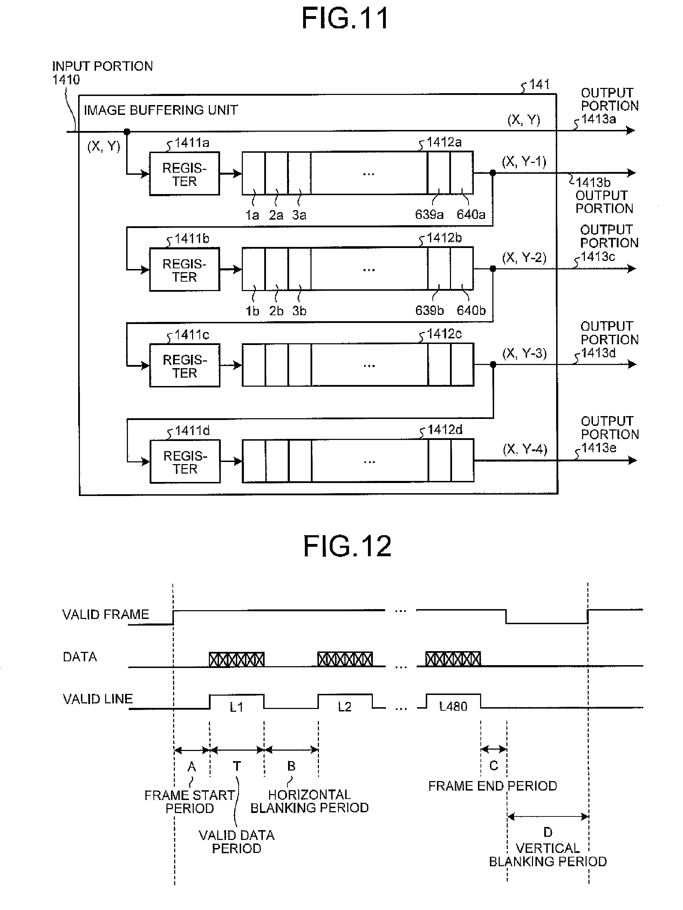

The image buffering unit 141 is a device that receives and buffers pixels output from the imaging element 12 in sequence. The specific configuration and operation of the image buffering unit 141 will be described later with reference to FIGS. 11 and 12.

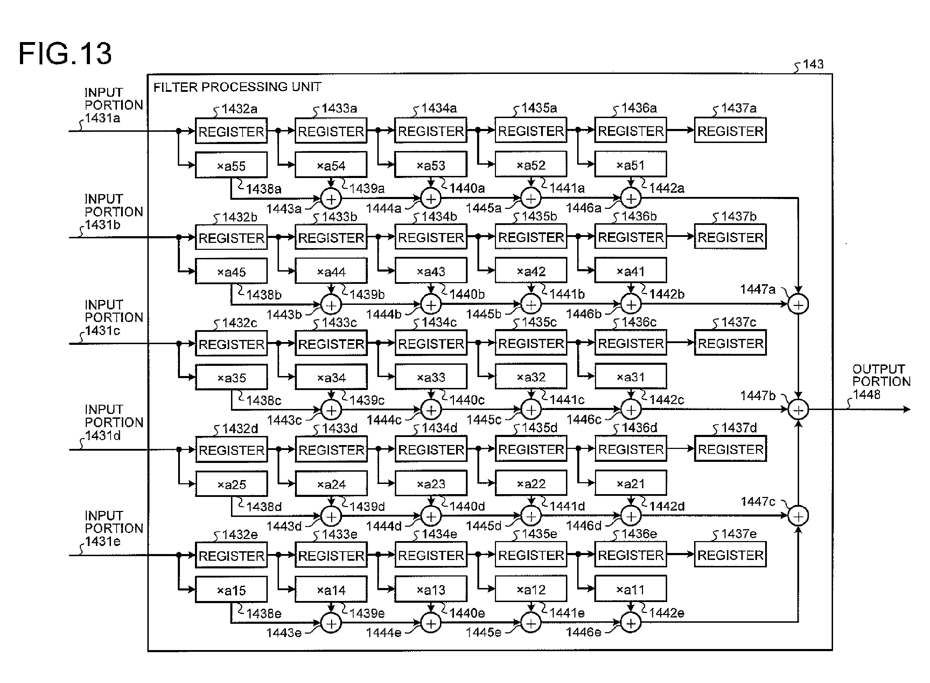

The filter processing unit 143 performs given filter processing on the pixels output from the image buffering unit 141 by a filter circuit. In the first embodiment, described is, as a filter to be used for the filter processing, an example of an inverse transform filter for the inverse transform processing in which the correction (restoration) of blur (aberration) is performed on a blurred image to which the point spread function has been imparted by the action of the phase plate 11a. The specific configuration and operation of the filter processing unit 143 will be described later with reference to FIGS. 13 to 16F.

Configuration and Operation of Image Buffering Unit 141

FIG. 11 is a block diagram illustrating one example of the configuration of the image buffering unit of the image processing unit in the first embodiment. FIG. 12 is a timing chart illustrating the operation of the image buffering unit to which pixels output from the imaging element are input. With reference to FIGS. 11 and 12, the configuration and operation of the image buffering unit 141 of the image processing unit 14 will be described.

As illustrated in FIG. 11, the image buffering unit 141 includes registers 1411a to 1411d and line buffers 1412a to 1412d. The image buffering unit 141 receives an input of pixels output from the imaging element 12 from an input portion 1410 and outputs the buffered pixels from output portions 1413a to 1413e. For each of the pixels of 640 by 480 in an image detected by the imaging element 12, the pixel of the X-th in the X direction and of the Y-th in the Y direction will be referred to as the pixel (X, Y).

As illustrated in FIG. 11, the input side of the register 1411a is coupled to the input portion 1410 and the output portion 1413a. The output sides of the registers 1411a to 1411d are coupled to the input sides of the respective line buffers 1412a to 1412d. The output sides of the line buffers 1412a to 1412c are coupled to the input sides of the respective registers 1411b to 1411d. The output sides of the line buffers 1412a to 1412d are further coupled to the respective output portions 1413b to 1413e.

Next, with reference to FIG. 12, the output operation of an image detected by the imaging element 12 will be described. The imaging element 12, while scanning detected pixels for each single horizontal line in the X direction, outputs the pixels included in a single horizontal line. Specifically, the imaging element 12 outputs the pixels included in the first horizontal line in the Y direction in sequence from the first pixel in the X direction up to the 640th pixel. The imaging element 12 performs the above-described operation to output the pixels included in the respective horizontal lines up to the 480th in the Y direction.

The foregoing operation will be described based on the timing chart illustrated in FIG. 12. As illustrated in FIG. 12, when a valid frame signal is in an on-state, the imaging element 12 outputs the pixels for a single frame, that is, for a single image. In the imaging element 12, subsequent to a frame start period A after the valid frame signal is turned into the on-state, a valid line signal L1 indicative of permission to output the pixels in the first horizontal line in the Y direction is turned into an on-state. During a valid data period T in which the valid line signal L1 is in the on-state, the imaging element 12 scans the first horizontal line in the Y direction, and outputs the first to the 640th pixels (pixel (1, 1) to pixel (640, 1)) in the X direction included in the horizontal line in sequence. After the pixels of the first horizontal line in the Y direction are output by the imaging element 12, the valid line signal L1 is turned into an off-state.

In the imaging element 12, subsequent to a horizontal blanking period B after the valid line signal L1 is turned into the off-state, a valid line signal L2 indicative of the permission to output the pixels in the second horizontal line in the Y direction is turned into an on-state. During the valid data period T in which the valid line signal L2 is in the on-state, the imaging element 12 scans the second horizontal line in the Y direction, and outputs the first to the 640th pixels (pixel (1, 2) to pixel (640, 2)) in the X direction included in the horizontal line in sequence. After the pixels of the second horizontal line in the Y direction are output by the imaging element 12, the valid line signal L2 is turned into an off-state.

The imaging element 12 performs the foregoing operation, while the valid data period T in which a valid line signal L480 is in an on-state, until the first to the 640th pixels in the X direction included in the 480th horizontal line in the Y direction are output. In the imaging element 12, subsequent to a frame end period C after the valid line signal L480 is turned into an off-state, the valid frame signal is turned into an off-state. The foregoing operation completes the output of pixels for a single frame by the imaging element 12. Furthermore, in the imaging element 12, subsequent to a vertical blanking period D after the valid frame signal is turned into the off-state, the valid frame signal is turned into an on-state again and the output of pixels for a subsequent one frame is started.

Next, with reference to FIG. 11, the buffering processing of pixels output from the imaging element 12 in the image buffering unit 141 will be described. The image buffering unit 141 receives an input of pixels output from the imaging element 12 from the input portion 1410. Specifically, for the first horizontal line in the Y direction, the image buffering unit 141 first outputs the pixel (1, 1) received from the imaging element 12 from the output portion 1413a and stores the pixel in the register 1411a.

The image buffering unit 141, at the next timing, stores the pixel stored in the register 1411a into a storage area 1a of the line buffer 1412a. The image buffering unit 141 then outputs the subsequent pixel (2, 1) received from the imaging element 12 from the output portion 1413a and stores the pixel in the register 1411a.

The image buffering unit 141, at the next timing, shifts the pixel stored in the storage area 1a to a storage area 2a of the line buffer 1412a and stores it therein, and then stores the pixel stored in the register 1411a into the storage area 1a. The image buffering unit 141 then outputs the subsequent pixel (3, 1) received from the imaging element 12 from the output portion 1413a and stores it in the register 1411a.

By repeating the foregoing operations, the image buffering unit 141 outputs the pixels of the first horizontal line in the Y direction received from the imaging element 12 from the output portion 1413a. Along with that, the image buffering unit 141 stores the first to the 639th pixels of the first horizontal line in the Y direction in the storage areas 639a to 1a of the line buffer 1412a, respectively, and stores the 640th pixel in the register 1411a.

Next, the image buffering unit 141 shifts the pixels stored in the storage areas 1a to 639a of the line buffer 1412a to the storage areas 2a to 640a and stores them therein, and then stores the pixel stored in the register 1411a into the storage area 1a. The image buffering unit 141 outputs the pixel (1, 1) stored in the storage area 640a from the output portion 1413b and stores it in the register 1411b. Then, for the second horizontal line in the Y direction, the image buffering unit 141 outputs the pixel (1, 2) received from the imaging element 12 from the output portion 1413a and stores it in the register 1411a. That is, the image buffering unit 141 outputs the pixels (1, 1) and (1, 2), which are the pixels for which the values in the X direction are the same, from the output portions 1413b and 1413a, respectively.

The image buffering unit 141, at the next timing, stores the pixel stored in the register 1411b into a storage area 1b of the line buffer 1412b. The image buffering unit 141 shifts the pixels stored in the storage areas 1a to 639a of the line buffer 1412a to the storage areas 2a to 640a and stores them therein, and then stores the pixel stored in the register 1411a into the storage area 1a. The image buffering unit 141 outputs the pixel (2, 1) stored in the storage area 640a from the output portion 1413b and stores it in the register 1411b. The image buffering unit 141 then outputs the subsequent pixel (2, 2) received from the imaging element 12 from the output portion 1413a and stores it in the register 1411a.

The image buffering unit 141, at the next timing, shifts the pixel stored in the storage area 1b to a storage area 2b of the line buffer 1412b and stores it therein, and then stores the pixel stored in the register 1411b into the storage area 1b. The image buffering unit 141 shifts the pixels stored in the storage areas 1a to 639a of the line buffer 1412a to the storage areas 2a to 640a and stores them therein, and then stores the pixel stored in the register 1411a into the storage area 1a. The image buffering unit 141 outputs the pixel (3, 1) stored in the storage area 640a from the output portion 1413b and stores it in the register 1411b. The image buffering unit 141 then outputs the subsequent pixel (3, 2) received from the imaging element 12 from the output portion 1413a and stores it in the register 1411a.

By repeating the foregoing operations, the image buffering unit 141 outputs the pixels of the same value in the X direction in the first and the second horizontal lines in the Y direction received from the imaging element 12 from the respective output portions 1413a and 1413b at the same timing. Along with that, the image buffering unit 141 stores the first to the 639th pixels of the first horizontal line in the Y direction into the storage areas 639b to 1b, respectively, of the line buffer 1412b and stores the 640th pixel in the register 1411b. Furthermore, the image buffering unit 141 stores the first to the 639th pixels of the second horizontal line in the Y direction into the storage areas 639a to 1a, respectively, of the line buffer 1412a and stores the 640th pixel in the register 1411a.

As in the foregoing operations, the image buffering unit 141 buffers the pixels of each horizontal line received from the imaging element 12 into the line buffers 1412a to 1412d. Along with that, the image buffering unit 141 outputs the pixels of the same value in the X direction, i.e., the pixels

(X, Y-4), (X, Y-3), (X, Y-2), (X, Y-1), and (X, Y), from the respective output portions 1413a to 1413e at the same timing.

FIG. 11 illustrates one example of the configuration of the image buffering unit 141, and it is not limited to this configuration. It only needs to be configured to perform the same action as the buffering processing of the image buffering unit 141 in the foregoing.

Configuration and Operation of Filter Processing Unit 143

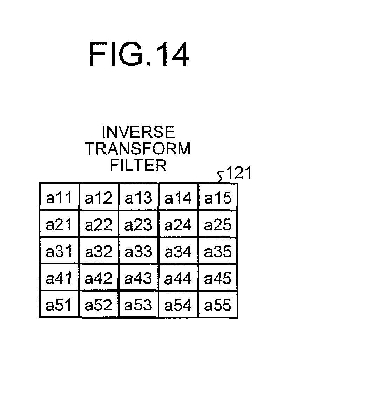

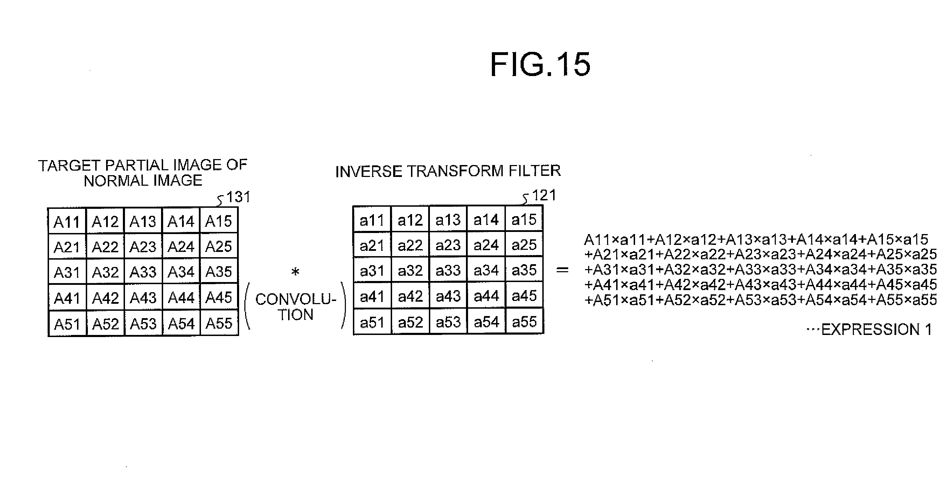

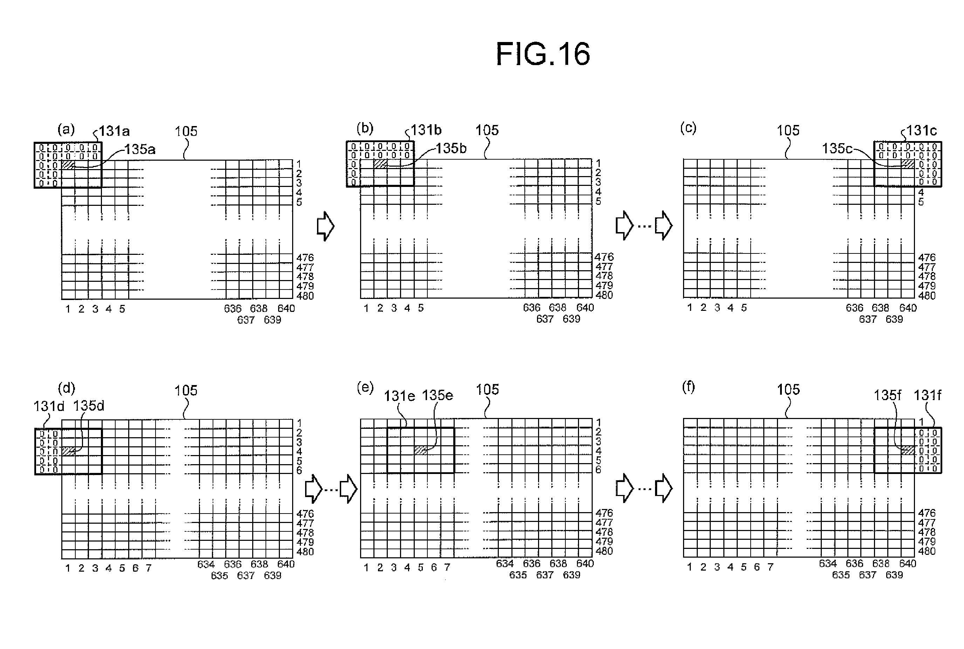

FIG. 13 is a block diagram illustrating one example of the configuration of the filter processing unit of the image processing unit in the first embodiment. FIG. 14 is a diagram illustrating one example of the configuration of an inverse transform filter. FIG. 15 is a diagram for explaining filter processing performed on an image by the inverse transform filter. FIGS. 16A to 16F are diagrams for explaining the operation of scanning a target partial image which is the target of filter processing performed on the image by the inverse transformation filter. With reference to FIGS. 13 to 16F, the configuration and operation of the filter processing unit 143 of the image processing unit 14 will be described.

The filter processing unit 143 includes, as illustrated in FIG. 13, registers 1432a to 1432e, 1433a to 1433e, 1434a to 1434e, 1435a to 1435e, 1436a to 1436e, and 1437a to 1437e. The filter processing unit 143 includes multipliers 1438a to 1438e, 1439a to 1439e, 1440a to 1440e, 1441a to 1441e, and 1442a to 1442e. The filter processing unit 143 includes adders 1443a to 1443e, 1444a to 1444e, 1445a to 1445e, 1446a to 1446e, and 1447a to 1447c. The filter processing unit 143 receives an input of pixels output from the image buffering unit 141 from input portions 1431a to 1431e. The filter processing unit 143 then, on the received pixels, performs a convolution calculation by an inverse transform filter having a filter coefficient for which the derivation method will be described later, and outputs the calculated value from an output portion 1448.

The multipliers 1438a to 1438e, 1439a to 1439e, 1440a to 1440e, 1441a to 1441e, and 1442a to 1442e are the circuits that output a product of the value of a pixel input from the input side of the multiplier multiplied by a filter coefficient. Specifically, the multipliers 1438a to 1442a output the product of a pixel multiplied by the respective filter coefficients a55 to a51. The multipliers 1438b to 1442b output the product of a pixel multiplied by the respective filter coefficients a45 to a41. The multipliers 1438c to 1442c output the product of a pixel multiplied by the respective filter coefficients a35 to a31. The multipliers 1438d to 1442d output the product of a pixel multiplied by the respective filter coefficients a25 to a21. The multipliers 1438e to 1442e output the product of a pixel multiplied by the respective filter coefficients a15 to a11. The adders 1443a to 1443e, 1444a to 1444e, 1445a to 1445e, 1446a to 1446e, and 1447a and 1447c are the circuits that output the sum of two values of data input from the input side. The adder 1447b is the circuit that outputs the sum of three values of data input from the input side.

As illustrated in FIG. 13, the input portions 1431a to 1431e are coupled to the input sides of the respective registers 1432a to 1432e. The registers 1432a to 1437a are connected in series. The same applies to the respective registers 1432b to 1437b, 1432c to 1437c, 1432d to 1437d, and 1432e to 1437e.

The input portions 1431a to 1431e are coupled to the input sides of the respective multipliers 1438a to 1438e. The output sides of the registers 1432a to 1435a are coupled to the input sides of the respective multipliers 1439a to 1442a. The same applies to the relation of connections between the registers 1432b to 1435b and the multipliers 1439b to 1442b, that between the registers 1432c to 1435c and the multipliers 1439c to 1442c, that between the registers 1432d to 1435d and the multipliers 1439d to 1442d, and that between the registers 1432e to 1435e and the multipliers 1439e to 1442e.

The output sides of the multipliers 1438a to 1438e are coupled to the input sides of the respective adders 1443a to 1443e. The adders 1443a to 1446a are connected in series. The same applies to the respective adders 1443b to 1446b, 1443c to 1446c, 1443d to 1446d, and 1443e to 1446e.

The output sides of the multipliers 1439a to 1442a are coupled to the input sides of the respective adders 1443a to 1446a. The same applies to the relation of connections between the multipliers 1439b to 1442b and the adders 1443b to 1446b, that between the multipliers 1439c to 1442c and the adders 1443c to 1446c, that between the multipliers 1439d to 1442d and the adders 1443d to 1446d, and that between the multipliers 1439e to 1442e and the adders 1443e to 1446e.

The output sides of the adders 1446a and 1446b are coupled to the input side of the adder 1447a. The output sides of the adders 1446d and 1446e are coupled to the input side of the adder 1447c. The output sides of the adders 1446c, 1447a, and 1447c are coupled to the input side of the adder 1447b. The output side of the adder 1447b is coupled to the output portion 1448.

Next, with reference to FIGS. 13 to 16F, inverse transform processing performed in the filter processing unit 143 will be described. As illustrated in FIG. 14, the filter used in the inverse transform processing is an inverse transform filter 121 that is a linear filter having taps of five by five and composed of the foregoing filter coefficients a11 to a15, a21 to a25, a31 to a35, a41 to a45, and a51 to a55. The portion of an image that is a target of inverse transform processing by the inverse transform filter 121 is assumed to be a target partial image 131 illustrated in FIG. 15. The target partial image 131 is a partial image having pixels of five by five and composed of pixels A11 to A15, A21 to A25, A31 to A35, A41 to A45, and A51 to A55.

The registers 1432a to 1432e, 1433a to 1433e, 1434a to 1434e, 1435a to 1435e, 1436a to 1436e, and 1437a to 1437e are assumed to be in a state that no data is stored, that is, in a state that a value of zero is stored therein. The filter processing unit 143 receives an input of the pixels A51, A41, A31, A21, and A11 of the target partial image 131 from the input portions 1431a to 1431e, and stores the input in the respective registers 1432a to 1432e and inputs the input to the respective multipliers 1438a to 1438e. The multipliers 1438a to 1438e output the product of the input pixel A51, A41, A31, A21, or A11 multiplied by the coefficient a55, a45, a35, a25, or a15, respectively. The products calculated by the multipliers 1438a to 1438e are summed by the adders 1447a to 1447c. The sum is output from the adder 1447b and is output to the outside of the filter processing unit 143 from the output portion 1448.

The filter processing unit 143, at the next timing, shifts the pixels A51, A41, A31, A21, and A11 stored in the registers 1432a to 1432e and stores the pixels into the registers 1433a to 1433e, and inputs the pixels to the respective multipliers 1439a to 1439e, respectively. The filter processing unit 143 receives an input of the pixels A52, A42, A32, A22, and A12 of the target partial image 131 from the input portions 1431a to 1431e, and stores the input in the registers 1432a to 1432e and inputs the input to the multipliers 1438a to 1438e, respectively. The multipliers 1439a to 1439e output the product of the input pixel A51, A41, A31, A21, or A11 multiplied by the filter coefficient a54, a44, a34, a24, or a14, respectively. The multipliers 1438a to 1438e output the product of the input pixel A52, A42, A32, A22, or A12 multiplied by the filter coefficient a55, a45, a35, a25, or a15, respectively. The products calculated by the multipliers 1439a to 1439e and the products calculated by the multipliers 1438a to 1438e are summed by the adders 1443a to 1443e and 1447a to 1447c. The sum is output from the adder 1447b and is output to the outside of the filter processing unit 143 from the output portion 1448.

Then, as a repeated result of the foregoing operations, it is assumed that the pixels A55 to A51, A45 to A41, A35 to A31, A25 to A21, and A15 to A11 are stored in the registers 1432a to 1436a, 1432b to 1436b, 1432c to 1436c, 1432d to 1436d, and 1432e to 1436e, respectively. It is further assumed that the pixels A55 to A51, A45 to A41, A35 to A31, A25 to A21, and A15 to A11 are input to the multipliers 1438a to 1442a, 1438b to 1442b, 1438c to 1442c, 1438d to 1442d, and 1438e to 1442e, respectively. The multipliers 1442a to 1442e output the product of the input pixel of A51, A41, A31, A21, or A11 multiplied by the filter coefficient a51, a41, a31, a21, or a11, respectively. The multipliers 1441a to 1441e output the product of the input pixel of A52, A42, A32, A22, or A12 multiplied by the filter coefficient a52, a42, a32, a22, or a12, respectively. The multipliers 1440a to 1440e output the product of the input pixel of A53, A43, A33, A23, or A13 multiplied by the filter coefficient a53, a43, a33, a23, or a13, respectively. The multipliers 1439a to 1439e output the product of the input pixel of A54, A44, A34, A24, or A14 multiplied by the filter coefficient a54, a44, a34, a24, or a14, respectively. The multipliers 1438a to 1438e output the product of the input pixel of A55, A45, A35, A25, or A15 multiplied by the filter coefficient a55, a45, a35, a25, or a15, respectively.

The products calculated by the multipliers 1438a to 1438e, 1439a to 1439e, 1440a to 1440e, 1441a to 1441e, and 1442a to 1442e are summed by all of the adders depicted in FIG. 13. The sum is output from the adder 1447b and is output to the outside of the filter processing unit 143 from the output portion 1448. As illustrated in FIG. 15, the sum is the calculated value of convolution performed on the target partial image 131 by the inverse transform filter 121, that is, the same value as the calculated value expressed by Expression 1 indicated in FIG. 15. The calculated value of convolution is the value of inverse transform processing performed on the central data that is the pixel located in the center of the target partial image 131. That is, the calculated value of convolution is, in the image after the inverse transform processing, the pixel at the location equivalent to the central data of the image before the inverse transform processing.

Next, on the inverse transform processing of the filter processing unit 143, the outline of the operation performed in the inverse transform processing while horizontal lines in the X direction of an image 105 are scanned will be described with reference to FIG. 16. The part (a) of FIG. 16 illustrates a state in which the filter processing unit 143 performs the inverse transform processing on the pixel (1, 1) of the image 105 by the inverse transform filter 121. As illustrated in the part (a) of FIG. 16, to perform a convolution calculation on the pixel (1, 1) as central data 135a, a target partial image 131a in which the pixel (1, 1) is the central data and the pixels in the portion overlapping the image 105 are required. That is, of the target partial image 131a, the pixels equivalent to the pixels A33 to A35, A43 to A45, and A53 to A55 of the target partial image 131 illustrated in FIG. 15 are necessary.

That necessitates that the pixels equivalent to the pixels A33 to A35, A43 to A45, and A53 to A55 are output from the output portions 1413a to 1413c of the image buffering unit 141. That further necessitates that the pixels equivalent to the pixels A35 to A33, A45 to A43, and A55 to A53 are stored in the registers 1432c to 1434c, 1432b to 1434b, and 1432a to 1434a of the filter processing unit 143. In the target partial image 131a, the pixels of the portion not overlapping the image 105 are to be handled as "0".

In the above-described state, the filter processing unit 143 performs, in the same manner as the convolution calculation illustrated in FIG. 15, a convolution calculation on the target partial image 131a by the inverse transform filter 121. The filter processing unit 143 outputs, as the pixel (1, 1) of the image after the inverse transform processing, the value of convolution calculation performed on the pixel (1, 1) that is the central data 135a in the target partial image 131a of the image 105.

Next, as illustrated in the part (b) of FIG. 16, the filter processing unit 143 shifts the pixel to be the target of convolution calculation by one in the X direction, and performs the inverse transform processing on the pixel (2, 1) that is the central data 135b in a target partial image 131b. The filter processing unit 143 then repeats the convolution calculation while shifting in the X direction on the horizontal line, and as illustrated in FIG. 16C, the filter processing unit 143 performs the inverse transform processing on the pixel (640, 1) that is the last pixel of the horizontal line in the X direction. As illustrated in the part (c) of FIG. 16, the pixel (640, 1) is the central data 135c of a target partial image 131c.

As in the foregoing, the filter processing unit 143 repeats the convolution calculation while shifting in the X direction on a horizontal line, and when the inverse transform processing on the last pixel of the horizontal line is finished, the filter processing unit 143 performs the inverse transform processing in the same manner on a subsequent horizontal line in the Y direction.

The parts (d) to (f) of FIGS. 16 illustrate a state in which the filter processing unit 143 performs the inverse transform processing on the pixels of the fourth horizontal line in the Y direction in the image 105. The part (d) of FIG. 16 illustrates a state in which the filter processing unit 143 performs the inverse transform processing on the pixel (1, 4) of the image 105 by the inverse transform filter 121. As illustrated in the part (d) of FIG. 16, to perform a convolution calculation on the pixel (1, 4) as central data 135d, a target partial image 131d in which the pixel (1, 4) is the central data and the pixels in the portion overlapping the image 105 are required. In the target partial image 131d, the pixels of the portion not overlapping the image 105 are to be handled as "0" in the same manner as above.

The part (e) of FIG. 16 illustrates a state in which the filter processing unit 143 performs the inverse transform processing on the pixel (5, 4) of the image 105 by the inverse transform filter 121. As illustrated in the part (e) of FIG. 16, because the whole of a target partial image 131e in which the pixel (5, 4) is the central data 135e is overlapping the image 105, the filter processing unit 143 can perform the inverse transform processing by using all of the pixels included in the target partial image 131e.

The filter processing unit 143 then repeats the convolution calculation while shifting in the X direction on the horizontal line, and as illustrated in the part (f) of FIG. 16, the filter processing unit 143 performs the inverse transform processing on the pixel (640, 4) that is the last pixel of the horizontal line in the X direction. As illustrated in the part (f) of FIG. 16, the pixel (640, 4) is the central data 135f of a target partial image 131f.

As in the foregoing, the filter processing unit 143 performs the inverse transform processing by performing the convolution calculation by the inverse transform filter 121 on each pixel constituting the image 105, and thus this can correct the image blurred by the phase plate 11a and improve the resolution of the image.

While the pixels of the portion not overlapping the image 105 in the target partial image that is the target of convolution calculation by the inverse transform filter 121 in the image 105 are assumed to be "0" as in the foregoing, it is not limited to this. For example, the pixels of the target partial image not overlapping the image 105 may be to use the pixels that are the pixels of the portion of the target partial image overlapping the image 105 when folded back with the central data of the target partial image as the reference.

Specifically, the target partial image 131a in the part (a) of FIG. 16 will be explained as an example. The names of the respective pixels in the target partial image 131a are assumed as the same as those of the pixels in the target partial image 131 illustrated in FIG. 15- In this case, the pixels in the portion of the target partial image 131a not overlapping the image 105 are the pixels A11 to A15, A21 to A25, A31, A32, A41, A42, A51, and A52. The pixels in the portion of the target partial image 131a overlapping the image 105 are the pixels A33 to A35, A43 to A45, and A53 to A55.

At this time, the pixels A31, A32, A41, A42, A51, and A52 use the values of the pixels A35, A34, A45, A44, A55, and A54, respectively, by folding back the pixels in the portion of the target partial image 131a overlapping the image 105 with the central data as the reference. The pixels A13 to A15, and A23 to A25 use the values of the pixels A53 to A55, and A43 to A45, respectively, by folding back the pixels in the portion of the target partial image 131a overlapping the image 105 with the central data as the reference. The pixels A11, A12, A21, and A22 use the values of the pixels that are in the portion of the target partial image 131a overlapping the image 105 and are in a positional relation of a point symmetry with the central data as the reference, that is, the pixels A55, A54, A45, and A44, respectively. The respective pixels in the target partial image may be determined by the foregoing method.

While the inverse transform filter of the filter processing unit 143 is exemplified as a filter with the number of taps of five by five as illustrated in FIGS. 14 and 15, it is not limited to this. That is, the number of taps of the filter may be a different number of taps such as 3 by 3, 15 by 15, or 21 by 21. In this case, the size of the target partial image needs to be matched in response to the number of taps of the filter. Furthermore, to make the central data, which is the target of the inverse transform processing by the filter, present, the number of taps of the filter needs to be an odd number.

It is preferable that the inverse transform filter have the number of taps of 15 by 15 or higher, for example. In the inverse transform filter, for an image to which a blur is added as the depth of field is extended by the phase plate, the width on the optical axis in which the blur can be corrected can be increased as the number of taps increases. Consequently, by using the inverse transform filter of a large number of taps, the variations in design of the phase plate and the depth of field of the lens can be increased.

Derivation of Frequency Response for Inverse Transform Filter

The method for deriving the frequency response for an inverse transform filter used in the inverse transform processing in which a spot that has been expanded at a single focused position by the lens unit 11 that is an optical system is restored to focus on a single point will be described first. As for the filter that implements the foregoing frequency response, a two-dimensional linear filter and finite impulse response (FIR) filter is suitable.

The model of the effect by the optical system on an image captured by the imaging element 12 is first expressed by the following Expression 2 that is an expression of a two-dimensional convolution calculation (convolution operation).

$$image_{captured}(x,y) = \iint image_{ideal}(x-x',y-y') \cdot h(x,y,x',y')dx'dy'$$

Expression 2

The $image_{captured}$ is a pixel of a two-dimensional captured image detected through the optical system, the $image_{ideal}$ is a pixel of an ideal image that represents the subject 4 itself, and the h represents the PSF of the optical system.

In the following description, in consideration of the effects of noise added to an image processing system (the imaging element 12 and the image processing unit 14), discussed is the derivation of the frequency response of the inverse transform filter that minimizes the mean square error of the error between each pixel of the image after the inverse transform processing and each pixel of the ideal image. The mean square error is expressed by the following Expression 3.

$$E[|image_{ideal}(n) - image_{processed}(n)|^2]$$

Expression 3

The E[] represents an anticipated value (average value), the n represents the position on the image, and the $image_{processed}(n)$ represents the pixel of the image of the $image_{captured}(n)$ on which the inverse transform processing has been performed. It is considered that noise is included in the $image_{captured}$.

By the Parseval's theorem stating that the sum of the total energy of waveform x(n) for the entire region of n and the sum of Fourier transform X($\omega$) of the energy of the waveform x(n) for all frequency components are equal, Expression 3 is expressed by the following Expression 4 as the mean square error in frequency domain.

$$E[|IMAGE_{ideal}(\omega) - IMAGE_{processed}(\omega)|^2]$$

Expression 4

The $IMAGE_{ideal}(\omega)$ represents the frequency response of the $image_{ideal}(n)$, the $IMAGE_{processed}(\omega)$ represents the frequency response of the $image_{processed}(n)$, and the co represents the spatial frequency.

Defining the frequency response of the inverse transform filter as R($\omega$), the frequency response R($\omega$) that yields the minimum value of the following Expression 5 is to be an optimal inverse transform filter.

$$E[|IMAGE_{ideal}(\omega) - R(\omega) \cdot IMAGE_{captured}(\omega)|^2]$$

Expression 5

The $IMAGE_{captured}(\omega)$ represents the frequency response of the $image_{captured}(n)$.

In Expression 5, by defining the $IMAGE_{ideal}(\omega)=S(\omega)$ and the $IMAGE_{captured}(\omega)=X(\omega)$, differentiating Expression 5 with respect to R* to obtain the minimum value of Expression 5 can obtain the following Expression 6.

$$\frac{\partial E[|S(\omega)-R(\omega)\cdot X(\omega)|^2]}{\partial R^*} = \frac{\partial E[(S(\omega)-R(\omega)X(\omega))(S(\omega)-R(\omega)X(\omega))^*]}{\partial R^*} =$$

$$= \frac{\partial E[S(\omega)S(\omega)^* - S(\omega)(R(\omega)X(\omega))^* - R(\omega)X(\omega)S(\omega)^* - R(\omega)R(\omega)(R(\omega)X(\omega))^*]}{\partial R^*}$$

$$= \frac{\partial E[|S(\omega)|^2 - S(\omega)R(\omega)^* X(\omega)^* - R(\omega)X(\omega)S(\omega)^* + R(\omega)|X(\omega)|^2 R(\omega)^*]}{\partial R^*}$$

$$= \frac{\partial\{E[|S(\omega)|^2] - R(\omega)^* E[S(\omega)X(\omega)^*] - R(\omega)E[X(\omega)S(\omega)^*] + R(\omega)R(\omega)^*|X(\omega)|^2\}}{\partial R^*}$$

$$= R(\omega)\cdot E[|X(\omega)|^2] - E[S(\omega)\cdot X(\omega)^*]$$

Expression 6

The E[|X(ω)|²] is an average value of power spectrum of the captured image including noise, the E[S (ω)·X(ω)*] is an average value of mutual power spectrum between the captured image including noise and the ideal image.

To obtain the minimum value of Expression 5, defining the rightmost side of Expression 6 as zero can obtain the following Expression 7.

$$R(\omega)\cdot E[|X(\omega)|^2] - E[S(\omega)\cdot X(\omega)^*] = 0 \qquad \text{Expression 7}$$

Expression 7 can obtain the following Expression 8.

$$R(\omega) = \frac{E[S(\omega)\cdot X(\omega)^*]}{E[|X(\omega)|^2]} \qquad \text{Expression 8}$$

The inverse transform filter based on the frequency response R(ω) expressed by Expression 8 is to be an optimal filter that minimizes the mean square error expressed by the above-described Expression 3.

Defining the frequency response of the noise as W(ω) and the frequency response of h that is the PSF of the optical system as H(ω), the above-described Expression 2 is expressed in frequency space by the following Expression 9.

$$X(\omega) = H(\omega)S(\omega) + W(\omega) \qquad \text{Expression 9}$$

When the frequency response W(ω) of the noise and the frequency response S(ω) are assumed to be uncorrelated, E[S(ω)·W(ω)*]=0 holds true, and thus substituting Expression 9 into the numerator in the right-hand side of the above-described Expression 8 can obtain the following Expression 10.

$$\begin{aligned} E[S(\omega)\cdot X(\omega)^*] &= E[S(\omega)(H(\omega)S(\omega)+W(\omega))^*] \\ &= E[S(\omega)((H(\omega)S(\omega))^* + W(\omega)^*)] = E[S(\omega)(S(\omega)^* H(\omega)^* + W(\omega)^*)] \\ &= E[|S(\omega)|^2 H(\omega)^*] + E[S(\omega)H(\omega)^*] = E[|S(\omega)|^2 H(\omega)^*] = H(\omega)^* \cdot E[|S(\omega)|^2] \end{aligned}$$

Expression 10

Similarly, when the frequency response W(ω) of the noise and the frequency response S(ω) are assumed to be uncorrelated, E[W(ω)·S(ω)*]=0 and E[S(ω)*·W(ω)]=0 hold true, and thus substituting Expression 9 into the denominator in the right-hand side of the above-described Expression 8 can obtain the following Expression 11.

$$E[|X(\omega)|^2] = E[(H(\omega)S(\omega)+W(\omega))(H(\omega)S(\omega)+W(\omega))^*]$$
$$= E[H(\omega)S(\omega)H(\omega)^*S(\omega)^* + H(\omega)S(\omega)W(\omega)^* + W(\omega)H(\omega)^*S(\omega)^* + W(\omega)W(\omega)^*]$$
$$= E[|H(\omega)S(\omega)|^2] + E[|W(\omega)|^2] = E[|H(\omega)|^2|S(\omega)|^2] + E[|W(\omega)|^2]$$
$$= |H(\omega)|^2 \cdot E[|S(\omega)|^2] + E[|W(\omega)|^2]$$

Expression 11

From the foregoing Expression 8, Expression 10, and Expression 11, the frequency response R($\omega$) expressed by the following Expression 12 can be obtained.

$$R(\omega) = \frac{H(\omega)^* \cdot E[|S(\omega)|^2]}{|H(\omega)|^2 \cdot E[|S(\omega)|^2] + E[|W(\omega)|^2]}$$    Expression 12

The inverse transform filter based on the frequency response R($\omega$) expressed by Expression 12 is to be an optimal filter that minimizes the mean square error expressed by the above-described Expression 3 when the noise in the image processing system is taken into consideration. The $E[|S(\omega)|^2]$ is an average value of the power spectrum of the ideal image, the $E[|W(\omega)|^2]$ is an average value of the power spectrum of the noise, and the $|H(\omega)|^2$ is the power spectrum of the frequency response of the optical system.

Integrating in frequency domain the square error between each pixel of the image after the inverse transform processing and each pixel of the ideal image while the frequency response R($\omega$) expressed by the above-described Expression 12 is applied can obtain the following Expression 13.

$$\int|S(\omega) - R(\omega)\cdot X(\omega)|^2 d\omega$$
$$= \int|S(\omega) - R(\omega)\cdot\{H(\omega)S(\omega)+W(\omega)\}|^2 d\omega$$
$$= \int|(1-R(\omega)H(\omega))S(\omega) - R(\omega)W(\omega)|^2 d\omega$$
$$= \int\{(1-R(\omega)H(\omega))S(\omega) - R(\omega)W(\omega)\}\{(1-R(\omega)H(\omega))S(\omega) - R(\omega)W(\omega)\}^* d\omega$$
$$= \int\{|(1-R(\omega)H(\omega))S(\omega)|^2 - S(\omega)R(\omega)^*W(\omega)^*(1-R(\omega)H(\omega))$$
$$- R(\omega)W(\omega)S(\omega)^*(1-R(\omega)H(\omega))^* + |R(\omega)W(\omega)|^2\}d\omega$$
$$= \int\{|1-R(\omega)H(\omega)|^2|S(\omega)|^2 + |R(\omega)|^2|W(\omega)|^2\}d\omega$$

Expression 13

In the calculation of Expression 13, as in the foregoing, the first term in the rightmost side of Expression 13, which uses the frequency response W($\omega$) of the noise and the frequency response S($\omega$) being uncorrelated, expresses the amount of error of the image that was unable to be restored after the inverse transform processing. The second term expresses the amount of error attributable to the noise.

By designing the frequency response H($\omega$) of the optical system such that the integrated value of Expression 13 is to be a minimum, the combination of the optical system and the inverse transform filter, in which the mean square error in frequency domain expressed by the above-described Expression 5 is minimized, can be obtained. Furthermore, by the Parseval's theorem, the combination of the optical system and the inverse transform filter, in which the mean square error in the real space expressed by the above-described Expression 3 is minimized, can be obtained.

The inverse transform filter based on the frequency response R($\omega$) expressed by the above-described Expression 12, however, is what can restore the spot expanded by the optical system at a single focused position (that is, the frequency response H at a single place) in the optical axis direction of the lens unit 11. Thus, at other defocused positions in which the shape of spot is different, the inverse transform filter based on the frequency response R($\omega$) expressed by Expression 12 will not be the optimal filter to restore the spot.

Next, the following describes the method for deriving the frequency response for an inverse transform filter used in the inverse transform processing in which a spot that has been expanded by the lens unit 11 that is an optical system within a certain range of defocused positions in the optical axis direction of the lens unit 11 is restored. This can obtain not the inverse transform filter that is optimal at a single focused position but an inverse transform filter that is optimal at a plurality of positions.

First, assuming two places of defocused positions, the sum of mean square errors in frequency domain for two images is expressed by the following Expression 14 by modifying the above-described Expression 5.

$$E[|IMAGE1_{ideal}(\omega) - R(\omega) \cdot IMAGE1_{captured}(\omega)|^2] + E[|IMAGE2_{ideal}(\omega) - R(\omega) \cdot IMAGE2_{captured}(\omega)|^2]$$

Expression 14

The two images correspond to IMAGE1 and IMAGE2.

In Expression 14, it is defined that $IMAGE1_{ideal}(\omega)=S1(\omega)$, $IMAGE1_{captured}(\omega)=X1(\omega)$, $IMAGE2_{ideal}(\omega)=S2(\omega)$, and $IMAGE2_{captured}(\omega)=X2(\omega)$. To obtain the minimum value of Expression 14, differentiating Expression 14 with respect to R* can obtain the following Expression 15.

$$\frac{\partial E[|IMAGE1_{ideal}(\omega) - R(\omega) \cdot IMAGE1_{captured}(\omega)|^2] + E[|IMAGE2_{ideal}(\omega) - R(\omega) \cdot IMAGE2_{captured}(\omega)|^2]}{\partial R^*}$$

$$= R(\omega) \cdot E[|X1(\omega)|^2] - E[S1(\omega) \cdot X1(\omega)^*] + R(\omega) \cdot E[|X2(\omega)|^2] - E[S2(\omega) \cdot X2(\omega)^*]$$

$$= R(\omega)\{E[|X1(\omega)|^2] + E[|X2(\omega)|^2]\} - \{E[S1(\omega) \cdot X1(\omega)^*] + E[S2(\omega) \cdot X2(\omega)^*]\}$$

Expression 15

To obtain the minimum value of Expression 15, solving Expression 15 for the frequency response R($\omega$) by defining the rightmost side of Expression 15 as zero can obtain the following Expression 16.

$$R(\omega) = \frac{E[S1(\omega) \cdot X1(\omega)^*] + E[S2(\omega) \cdot X2(\omega)^*]}{E[|X1(\omega)|^2] + E[|X2(\omega)|^2]}$$

Expression 16

When it is assumed that the same image is being captured by the image capturing apparatus 1, it can be said that $S1(\omega)=S2(\omega)$. Thus, by substituting the $S1(\omega)$ and the $S2(\omega)$ with $S(\omega)$, from the relational expression of Expression 9 in the foregoing, the following Expression 17 can be obtained.

$$R(\omega) = \frac{\{H1(\omega)^* + H2(\omega)^*\} \cdot E[|S(\omega)|^2]}{\{|H1(\omega)|^2 + |H2(\omega)|^2\}E[|S(\omega)|^2] + 2E[|W(\omega)|^2]}$$

Expression 17

The inverse transform filter based on the frequency response R($\omega$) expressed by Expression 17 is to be an optimal filter that minimizes the mean square error in frequency domain expressed by the above-described Expression 14.

While the above is the situation with two images, the frequency response R($\omega$) generalized to N images, i.e., N defocused positions is expressed by the following Expression 18.

$$R(\omega) = \frac{\sum_{n=1}^{N}\{Hn(\omega)^*\} \cdot E[|S(\omega)|^2]}{\sum_{n=1}^{N}\{|Hn(\omega)|^2\}E[|S(\omega)|^2] + N \cdot E[|W(\omega)|^2]}$$

Expression 18

The inverse transform filter based on the frequency response R(ω) expressed by Expression 18 is to be an optimal filter that minimizes the mean square error in frequency domain corresponding to a plurality of defocused positions based on Expression 14 in consideration of the noise in the image processing system. It is preferable that the frequency response R be derived by as many defocused positions as possible, that is, with the value of N as large as possible.

Integrating in frequency domain the square error between each pixel of the image after the inverse transform processing and each pixel of the ideal image while the frequency response R(ω) expressed by the above-described Expression 17 is applied can obtain the following Expression 19.

$$\int \left| S(\omega) - R(\omega) \cdot X1(\omega) \right|^2 + \left| S(\omega) - R(\omega) \cdot X2(\omega) \right|^2 d\omega$$
$$= \int \left[ \left| S(\omega) - R(\omega) \cdot \{H1(\omega)S(\omega) + W(\omega)\} \right|^2 + \left| S(\omega) - R(\omega) \cdot \{H2(\omega)S(\omega) + W(\omega)\} \right|^2 \right] d\omega$$
$$= \int \{ \left| 1 - R(\omega)H1(\omega) \right|^2 \left| S(\omega) \right|^2 + \left| 1 - R(\omega)H2(\omega) \right|^2 \left| S(\omega) \right|^2 + 2\left| R(\omega) \right|^2 \left| W(\omega) \right|^2 \} d\omega$$

$$\text{Expression 19}$$

The calculation of Expression 19 uses that, as in the foregoing, the frequency response W(ω) of the noise and the frequency response S(ω) are uncorrelated.

When the above-described Expression 19 is generalized to N images, i.e., N defocused positions, the following Expression 20 can be obtained.

$$\int \sum_{n}^{N} \left| S(\omega) - R(\omega) \cdot Xn(\omega) \right|^2 d\omega$$
$$= \int \left[ \sum_{n}^{N} \{ \left| 1 - R(\omega)Hn(\omega) \right|^2 \left| S(\omega) \right|^2 \} + N\left| R(\omega) \right|^2 \left| W(\omega) \right|^2 \right] d\omega \qquad \text{Expression 20}$$

The value expressed by the following Expression 21 that is the quotient of the value of Expression 20 divided by N is defined as the mean square error (MSE) in frequency domain when generalized to N defocused positions.

$$MSE = \frac{1}{N} \int \left[ \sum_{n}^{N} \{ \left| 1 - R(\omega)Hn(\omega) \right|^2 \left| S(\omega) \right|^2 \} + N\left| R(\omega) \right|^2 \left| W(\omega) \right|^2 \right] d\omega \qquad \text{Expression 21}$$

By designing the frequency response H(ω) of the optical system such that the MSE expressed by Expression 21 is to be minimized, the combination of the optical system and the inverse transform filter, in which the mean square error in the frequency domain expressed by the above-described Expression 14 is minimized, can be obtained. Furthermore, by the Parseval's theorem, the combination of the optical system and the inverse transform filter, in which the mean square error in the real space is minimized, can be obtained. Consequently, for example, the inverse transform filter 121 of the image buffering unit 141 in the image processing unit 14 only needs to be derived based on the frequency response R(ω) expressed by Expression 18.

As in the foregoing, for N defocused positions, that is, a plurality of defocused positions, the optimal inverse transform filter can be obtained from the frequency response R(ω) expressed by Expression 18. Consequently, even when the shape of a spot is changed depending on the defocused position, the spot can be restored by the same inverse transform filter, and thus the depth of field can be extended in a wider range.

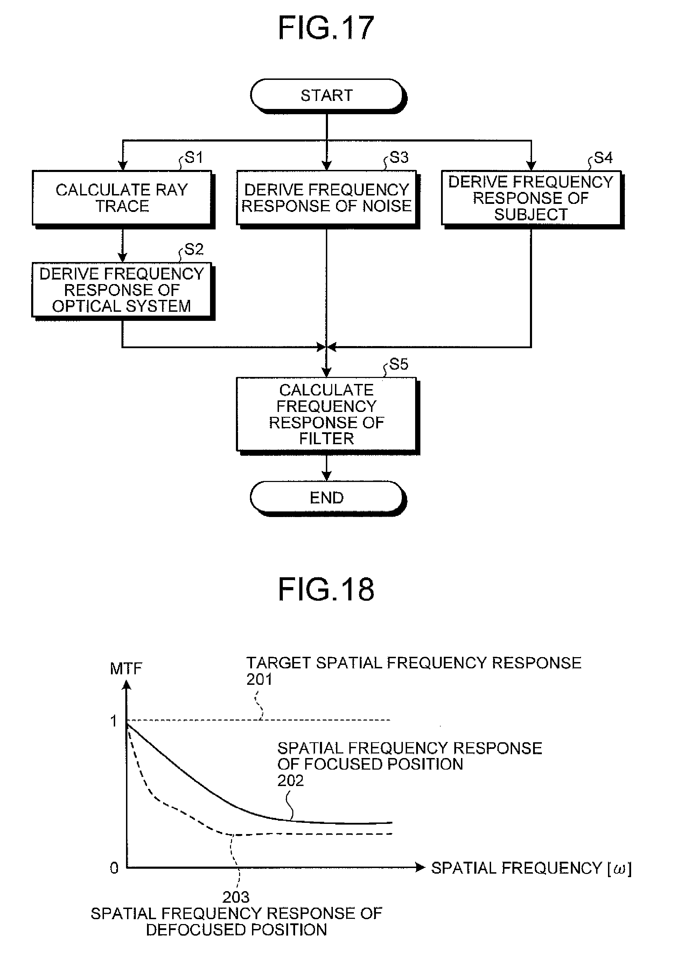

FIG. 17 is a flowchart illustrating the sequence of calculating a frequency response to determine the inverse transformation filter of the filter processing unit in the image processing unit in the first embodiment. With reference to FIG. 17, the sequence of calculating the frequency response R expressed by Expression 18 will be described.

Step S1

Based on the optical-system parameters such as surface curvature and interplanar spacing of the lens unit 11 and the characteristics of the phase plate 11a, the PSF is first derived by a ray trace calculation for the lens unit 11. With the optical-system parameters at a plurality of defocused positions, the ray trace calculation is performed to derive the PSF. The sequence is then advanced to Step S2.

Step S2

By performing Fourier transform on the PSF derived at Step S1, the frequency response H of the optical system is derived. The sequence is then advanced to Step S5.

Step S3

The noise characteristic added to the image processing system (the imaging element 12 and the image processing unit 14) is measured. Then, by performing Fourier transform on the noise characteristic, the frequency response W of the noise is derived. When it is difficult to measure the noise characteristic, the frequency response W of the noise may be derived, not by the spatial frequency, but with the value of S/N ratio of the imaging element 12 as a constant. The sequence is then advanced to Step S5.

Step S4

The images of natural scenery or of a barcode and the like captured by the image capturing apparatus 1 in various sizes and under a variety of photographing conditions are defined as ideal images. The Fourier transform is performed on the values of the pixels constituting the ideal images, and the average value in spatial frequency $\omega$ is derived as the frequency response S of the subject. The frequency response S of the subject may be defined as the frequency response of the pixels of a captured image based on the light having passed through an optical system that imparts no aberration to the light emitted from the subject. The frequency response S of the subject may be defined as a constant. The sequence is then advanced to Step S5.

Step S5

From the frequency response H of the optical system derived at Step S2, the frequency response W of the noise derived at Step S3, and the frequency response S of the subject derived at Step S4, the frequency response R for the inverse transform filter is calculated by using the above-described Expression 18.

Spatial Frequency Response of MTF

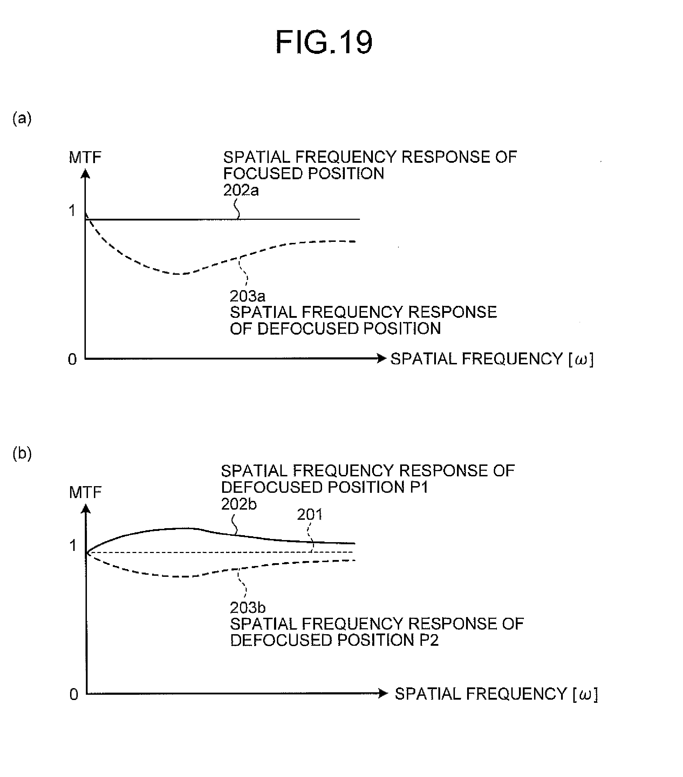

FIG. 18 is a chart illustrating spatial frequency responses of an image captured by the light having passed through the optical system. FIGS. 19A and 19B are charts illustrating the spatial frequency responses of the image on which inverse transformation processing was performed. With reference to FIGS. 18 to 19B, the spatial frequency response of an image will be described.

First, with reference to FIG. 18, the MTF with respect to the spatial frequency $\omega$ for the image in which the light having passed through the lens unit 11 (optical system) was captured by the imaging element 12 will be described. A target spatial frequency response 201 illustrated in FIG. 18 represents with respect to the spatial frequency $\omega$ the response of an MTF when the contrast in the captured image of the subject is completely reproduced (MTF=1).

As in the foregoing, to the light having passed through the lens unit 11, the point spread function (PSF) is added by the lens and the phase plate 11a that act to impart aberration. A spatial frequency response 202 in FIG. 18 represents with respect to the spatial frequency $\omega$ the response of the MTF of the image captured at a focused position by the imaging element 12 based on the light having passed through the lens unit 11. A spatial frequency response 203 in FIG. 18 represents with respect to the spatial frequency $\omega$ the response of the MTF of the image captured at a defocused position by the imaging element 12 based on the light having passed through the lens unit 11. Because the PSF has been added to the light having passed through the lens unit 11, both the spatial frequency response 202 at the focused position and the spatial frequency response 203 at the defocused position, as illustrated in FIG. 18, assume lower values than the target spatial frequency response 201.

Next, with reference to the part (a) of FIG. 19, considered is a situation in which the inverse transform filter of the filter processing unit 143 illustrated in FIG. 13 is obtained by the frequency response R expressed by the above-described Expression 12. In this case, with respect to the spatial frequency $\omega$, the MTF of an image that is captured by the imaging element 12 and on which the inverse transform processing is performed by the filter processing unit 143 will be described.

A spatial frequency response 202a in the part (a) of FIG. 19 represents with respect to the spatial frequency $\omega$ the response of the MTF of the image that is the image captured by the imaging element 12 at the focused position and on which the inverse transform processing was performed by the filter processing unit 143. A spatial frequency response 203a in the part (a) of FIG. 19 represents with respect to the spatial frequency $\omega$ the response of the MTF of the image that is the image captured by the imaging element 12 at a defocused position and on which the inverse transform processing was performed by the filter processing unit 143. As in the foregoing, because Expression 12 represents the frequency response R of the inverse transform filter that restores the image to which the PSF was added by the lens unit 11 at a single focused position, the spatial frequency response 202a is of MTF=1 and thus corresponds to the target spatial frequency response 201. However, the inverse transform filter derived from the frequency response R expressed by Expression 12 does not correspond to a defocused position, at which the shape of a spot is different from that at the focused position, and thus the MTF of the spatial frequency response 203a is lower than the MTF of the spatial frequency response 202a.

Next, with reference to the part (b) of FIG. 19, considered is a situation in which the inverse transform filter of the filter processing unit 143 illustrated in FIG. 13 is obtained based on the frequency response R expressed by the above-described Expression 18. In this case, with respect to the spatial frequency $\omega$, the MTF of an image that was captured by the imaging element 12 and on which the inverse transform processing was performed by the filter processing unit 143 will be described.

A spatial frequency response 202b in the part (b) of FIG. 19 represents with respect to the spatial frequency $\omega$ the response of the MTF of the image that is the image captured by the imaging element 12 at a defocused position P1 and on which the inverse transform processing was performed by the filter processing unit 143. A spatial frequency response 203b in the part (b) of FIG. 19 represents with respect to the spatial frequency $\omega$ the response of the MTF of the image that is the image captured by the imaging element 12 at a defocused position P2 and on which the inverse transform processing was performed by the filter processing unit 143. As in the foregoing, Expression 18 expresses the frequency response R of the inverse transform filter that restores the image to which the PSF has been added by the lens unit 11 at a plurality of defocused positions, that is, a given position range (depth of field) in the optical axis direction of the lens unit 11. Consequently, at any of the defocused positions included within the depth of field, the MTF in the spatial frequency response of the image that was captured by the imaging element 12 and on which the inverse transform processing was performed by the filter processing unit 143 is close to the MTF of the target spatial frequency response 201. That is, the frequency response of the image that is at the defocused positions and on which the inverse transform processing was performed by the above-described inverse transform filter may, as illustrated in the part (b) of FIG. 19, be of larger values or of smaller values than the target spatial-frequency response 201. In any event, the frequency response of the image on which the inverse transform processing was performed by the above-described inverse transform filter is, as illustrated in FIG. 19B, close to the target spatial frequency response 201.

As in the foregoing, the filter processing unit 143 can restore the image to which the PSF has been added by the lens unit 11, at a given position range, by the inverse transform processing performed by the inverse transform filter obtained based on the frequency response $R(\omega)$ expressed by Expression 18. Consequently, even when the shape of spot is changed within a given position range, the spot can be restored by the same inverse transform filter, and thus the depth of field can be extended in a wider range.

Formation of In-focus Area

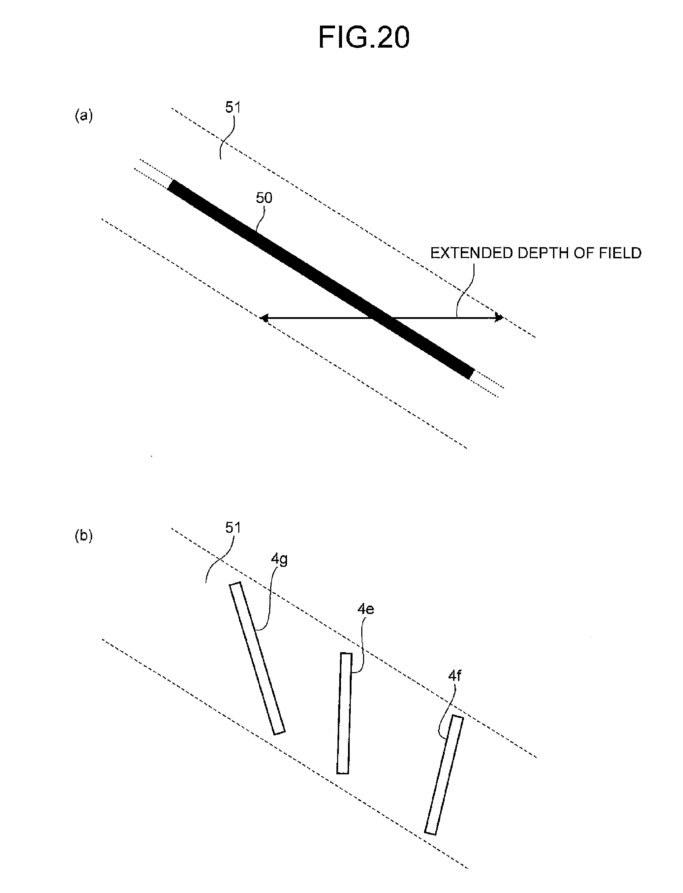

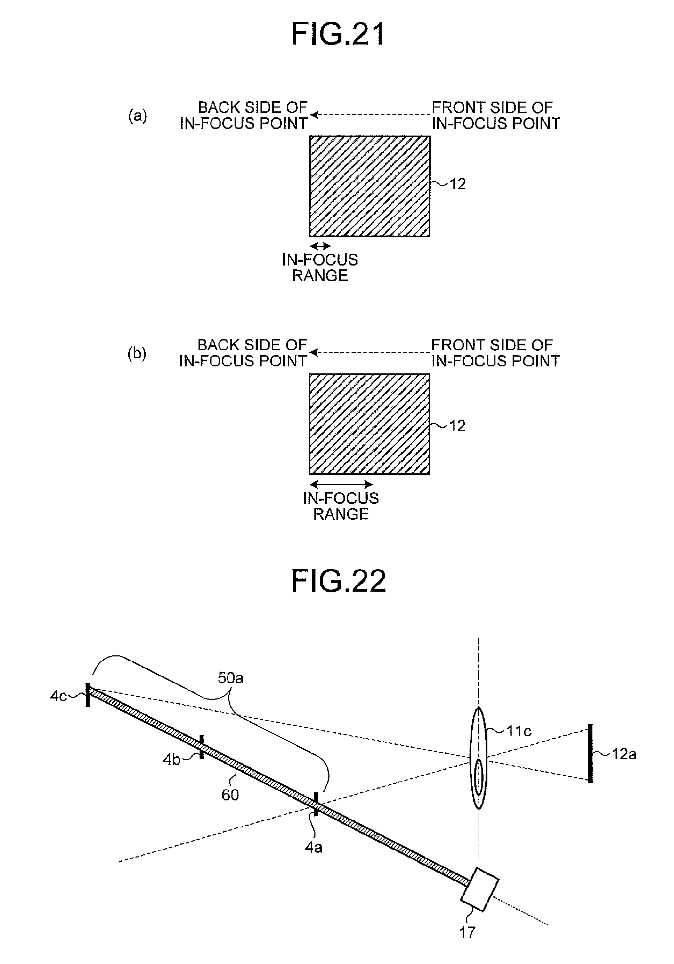

FIG. 20is diagram for explaining an in-focus area formed when the depth of field is extended at each position of the in-focus plane. FIG. 21is diagram for explaining that an area on the imaging element in focus is extended. With reference to FIGS. 20 and 21, an in-focus area 51 formed by the depth of field being extended at each position of the in-focus plane 50 will be described.

As in the foregoing, by the filter processing unit 143, by performing the inverse transform processing by the inverse transform filter based on the frequency response $R(\omega)$ expressed by the above-described Expression 18, as illustrated in the part (a) of FIG. 20, the depth of field is extended in the arrow direction (the optical axis direction of the lens unit 11) at each position of the in-focus plane 50. Consequently, when the inverse transform processing is not performed, an image of a subject is not captured in a focused state unless the subject is on the in-focus plane 50. In contrast, by performing the above-described inverse transform processing, the area to be in focus is extended in the optical axis direction of the lens unit 11 and the in-focus area 51 is formed. That is, as long as the subject is included within the in-focus area 51, an image of the subject can be captured in a state of the subject being in-focus overall. For example, as illustrated in the part (b) of FIG. 20, because subjects 4e to 4g at various angles are arranged such that the subjects 4e to 4g as a whole are included within the in-focus area 51, the images of the subjects 4e to 4g can be captured in an in-focus state overall. In this case, the light beam 60 emitted from the light source 17 only needs to be emitted such that the light beam 60 is at least included within the in-focus area 51.

Furthermore, for example, when the in-focus range at the position where the subject 4c is placed (the back side of the in-focus plane 50) on the in-focus plane 50 illustrated in FIG. 8 is considered on the sensor surface of the imaging element 12, if the inverse transform processing is not performed by the filter processing unit 143, as illustrated in the part (a) of FIG. 21, the in-focus range is narrow. In contrast, when the inverse transform processing is performed by the filter processing unit 143, as illustrated in the part (b) of FIG. 21, the in-focus range on the sensor surface of the imaging element 12 corresponding to the back side of the in-focus plane 50 is extended.

As in the foregoing, the image capturing apparatus 1 in the first embodiment disposes the sensor surface of the imaging element 12 being tilted with respect to the principle surface of the lens unit 11 based on the Scheimpflug principle and forms the in-focus plane 50 in which the in-focus position is stretched in the optical axis direction of the lens unit 11. Furthermore, the light source 17 is disposed to emit the light beam 60 such that the direction of the light beam 60 emitted is displaced from the central axis direction of the angle of view of the lens unit 11 and the light beam 60 is positioned on the in-focus plane 50. Consequently, a captured image that is in focus in a wide range in the optical axis direction of the lens unit 11 can be obtained, and thus the user can easily define an appropriate image capturing position corresponding to the distance to a subject by moving the image capturing apparatus 1 such that the subject is placed at the position indicated by the light beam 60 emitted from the light source 17, and can obtain a captured image that is focused on the subject. The light source 17 does not necessarily need to emit the light beam 60 to be positioned on the in-focus plane 50 strictly, and even when the light beam 60 is emitted at least near the in-focus plane 50 such as a position that is slightly off the in-focus plane 50 and in parallel with the in-focus plane 50, the above-described effect can be yielded.

By the filter processing unit 143, by performing the inverse transform processing by the inverse transform filter based on the frequency response $R(\omega)$ expressed by the above-described Expression 18, the depth of field is extended in the optical axis direction of the lens unit 11 at each position of the in-focus plane 50 being stretched in the optical axis direction of the lens unit 11. Consequently, the area to be in focus is extended in the optical axis direction of the lens unit 11 and the in-focus area 51 is formed. Then, as long as a subject is included within the in-focus area 51, even when the subject is of a given size, an image of the subject can be captured in a state of the subject being in-focus overall. Furthermore, in a wide range in the optical axis direction of the lens unit 11, a captured image in which the subject is in focus overall can be obtained.

The image capturing apparatus 1 in the first embodiment is exemplified to include the light source 17, and thus the user can easily obtain a captured image in which a subject is in focus, by moving the image capturing apparatus 1 such that the subject is placed at the position indicated by the light beam 60 emitted from the light source 17. However, when the image capturing apparatus 1 is used being fixed in a production line or the like, for example, the image capturing apparatus 1 is usually fixed such that a subject (for example, a two-dimensional code affixed on a workpiece running on the production line) surely passes through the in-focus plane 50 or the in-focus area 51. In this case, the light source 17 is not necessarily needed, and as long as the subject is included within the in-focus area 51, the effect in which an image can be captured in a state of the subject being in-focus overall can be yielded even when the subject is of a given size.

When the in-focus plane 50 in which the in-focus position is stretched in the optical axis direction of the lens unit 11 is formed by using the Scheimpflug principle as in the foregoing, and when a small subject for which an image can be captured within a narrow in-focus range that is limited by the depth of field of the lens unit 11 is handled, the extension of the depth of field by the inverse transform processing of the filter processing unit 143 is not necessarily needed. Even in this case, the image capturing apparatus 1 including the light source 17 can have the effect in which a captured image that is in focus in a range extended in the optical axis direction of the lens unit 11 can be obtained, and thus the user can easily define an appropriate image capturing position depending on the distance to the subject by moving the image capturing apparatus 1 such that the subject is placed at the position indicated by the light beam 60 emitted from the light source 17, and can obtain a captured image in which the subject is in focus.

While the inverse transform processing by the inverse transform filter based on the frequency response $R(\omega)$ expressed by the above-described Expression 18 is exemplified for the extended depth of field, the method for extended depth of field is not limited to this. That is, the extension of the depth of field may be implemented by the inverse transform processing by a different inverse transform filter, or by other different processing.

Modification of First Embodiment

An image capturing apparatus according to a modification of the first embodiment will be described with a focus on the points different from those of the image capturing apparatus 1 in the first embodiment.

FIG. 22 is a diagram illustrating one example of the configuration of a relevant portion in a periphery of the optical system in the image capturing apparatus according to the modification of the first embodiment. With reference to FIG. 22, the configuration of the relevant portion in the periphery of the optical system in the image capturing apparatus in the modification of the first embodiment will be described.

The image capturing apparatus in the present modification has the configuration in which the lens unit 11 of the image capturing apparatus 1 in the first embodiment is substituted with a multifocal lens 11c (optical system). By using such a multifocal lens 11c, as illustrated in FIG. 22, an in-focus plane 50a, as the same as the in-focus plane 50 in the first embodiment, in which the in-focus position is stretched in the optical axis direction can be formed. By using the multifocal lens 11c, the sensor surface of an imaging element 12a is not necessary to be disposed being tilted with respect to the principle surface of the multifocal lens 11c, and the sensor surface of the imaging element 12a and the principle surface of the multifocal lens 11c are in a state of being parallel to each other. The state of being parallel is not limited to a state of being strictly parallel, and includes a state of being approximately parallel. By employing the image capturing apparatus thus configured in the present modification, any of three subjects 4a to 4c being on the in-focus plane 50a illustrated in FIG. 22 form images on the imaging element 12a. That is, the in-focus plane 50a is formed based on the optical characteristics of the multifocal lens 11c and the positional relation of the multifocal lens 11c and the sensor surface (image surface) of the imaging element 12a. The light source 17 emits the light beam 60 such that the direction of the light beam 60 emitted is displaced from the central axis direction of the angle of view of the multifocal lens 11c and the light beam 60 is positioned on the in-focus plane 50a.

As in the foregoing, by using the multifocal lens 11c as the optical system of the image capturing apparatus, the in-focus plane 50a in which the in-focus position is stretched in the optical axis direction can be formed, and it can be configured such that the sensor surface of the imaging element 12a is not necessary to be disposed being tilted with respect to the principle surface of the multifocal lens 11c. Consequently, the overall size of the image capturing apparatus can be made compact.

Second Embodiment

An image capturing apparatus according to a second embodiment will be described with a focus on the points different from those of the image capturing apparatus in the first embodiment. In the first embodiment, described has been, as the inverse transform processing performed in the filter processing unit 143 for the extended depth of field, the processing that can restore a spot by the same inverse transform filter even when the shape of the spot is changed in a given positional range (a plurality of defocused positions). In the second embodiment, the operation to achieve the extended depth of field by inverse transform processing that restores a blur that is an optical aberration while suppressing noise will be described. In the second embodiment, the overall configuration of the image capturing system, the configuration of the image capturing apparatus, the configuration of the relevant portion in the periphery of the lens unit 11, and the configuration of the image buffering unit 141 are the same as those illustrated in FIGS. 1 to 3, 8, and 11 in the first embodiment.

Frequency Response R' for Local Inverse Transform Filter

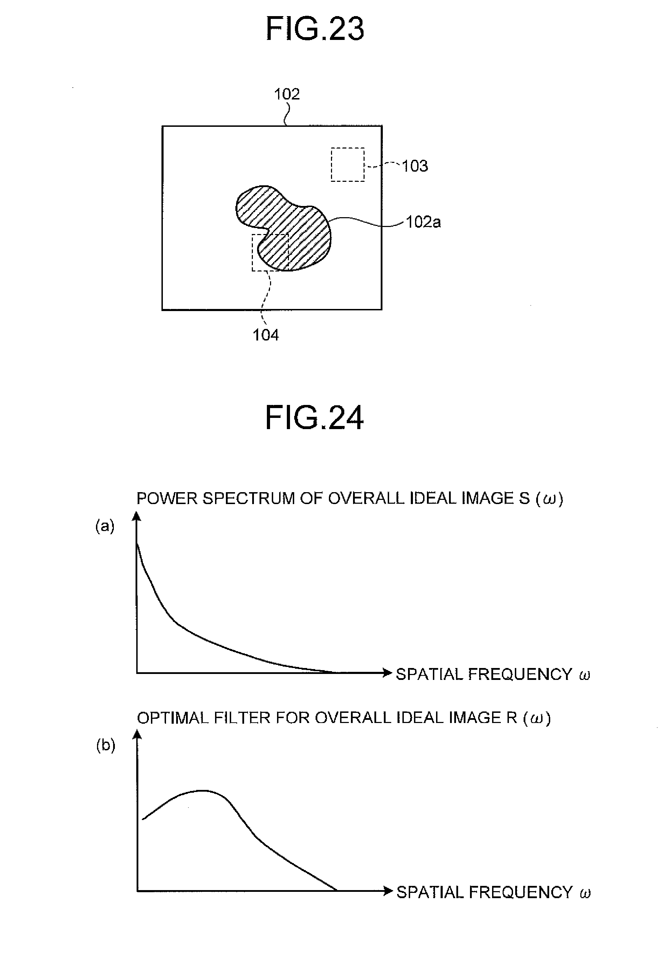

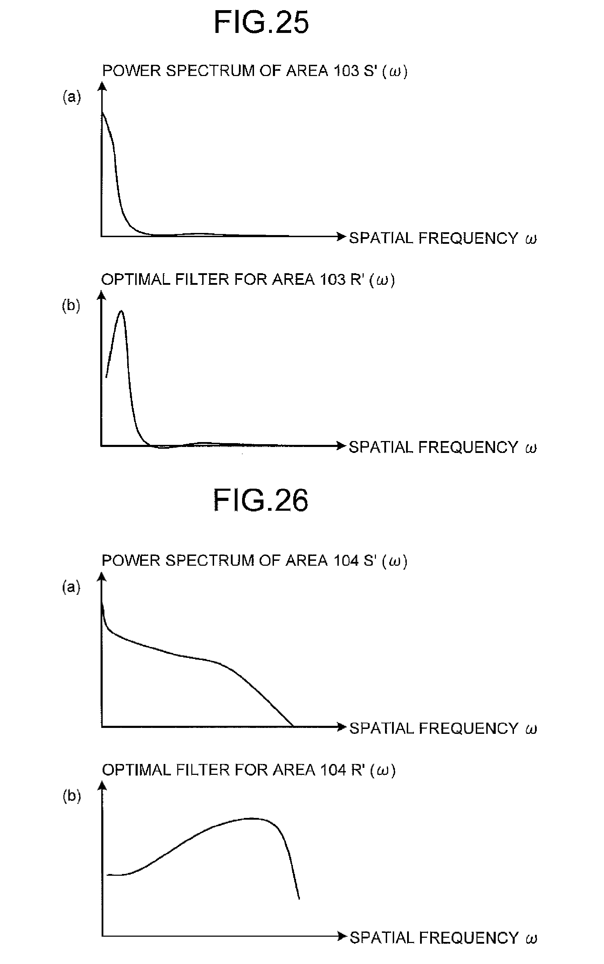

FIG. 23 is a diagram for explaining that a power spectrum is different according to each area in a captured image. FIG. 24 is a chart for explaining the power spectrum and an optimal filter of an overall captured image. FIG. 25 is a chart for explaining the power spectrum and an optimal filter of an area in a flat portion of the captured image. FIG. 26 is a chart for explaining the power spectrum and an optimal filter of an area in a texture portion of the captured image. With reference to FIGS. 23 to 26, the frequency response R'($\omega$) for a local inverse transform filter will be described.

The frequency response S($\omega$) in Expression 12 to obtain the frequency response R($\omega$) of the inverse transform filter in the first embodiment is assumed to be known, that is, it is what can be said to be the frequency response of the whole of the ideal image. However, as illustrated in FIG. 23, a captured image 102 that is an image actually captured by the actual imaging element 12 is to have a texture portion 102a, and a flat portion that is different from the texture portion 102a. In the first embodiment, based on the known frequency response S($\omega$) of the overall ideal image illustrated in the part (a) of FIG. 24, described has been the operation of performing the inverse transform processing by using the frequency response R($\omega$) of the inverse transform filter illustrated in the part (b) of FIG. 24 such that the MSE expressed by the above-described Expression 21 is minimized. When the filter processing is performed based on the frequency response R($\omega$), the MSE expressed by the above-described Expression 21 can certainly be minimized for the overall captured image 102. However, for example, in an area 103 that is a flat portion in the captured image 102, the portion in the region of spatial frequency $\omega$ in which no spectrum is present is also amplified, whereby unnecessary noise is increased.

As illustrated in the part (a) of FIG. 25, the frequency response of a local area equivalent to the area 103 in the ideal image is defined as S'($\omega$). Then, considered can be the frequency response R'($\omega$) for a local inverse transform filter that amplifies only a region of the spatial frequency $\omega$ in which the spectrum of frequency response S'($\omega$) is present (low frequency region), and that yields a minimum MSE in the area 103 (see the part (b) of FIG. 25).

In an area 104 that includes the texture portion 102a, as illustrated in the part (a) of FIG. 26, in the frequency response S'($\omega$) of a local area equivalent to the area 104 in the ideal image, the spectrum is present up to a high frequency region of the spatial frequency $\omega$. Consequently, for the spatial frequency S'($\omega$) of the area 104, the frequency response R'($\omega$) for a local inverse transform filter that amplifies up to the high frequency region, and that yields a minimum MSE in the area 104 can be considered (see the part (b) of FIG. 26).

As in the foregoing, by deriving the frequency response R'($\omega$) for the inverse transform filter that is locally applied as the inverse transform processing of image, the amplification of noise can be suppressed and the reproducibility of the texture of image can be improved. The following describes a frequency response K($\omega$) that is derived to simplify the calculation of the frequency response R'($\omega$) of the local inverse transform filter and of the inverse transform processing by the frequency response R'($\omega$).

First, when the frequency response S($\omega$) in the expression to obtain the frequency response R($\omega$) expressed

in the above-described Expression 12 is substituted with the frequency response S'(ω) of a local area of the ideal image, the frequency response R'(ω) that is expressed by the following Expression 22 and yields the minimum MSE of the local area can be obtained.

$$R'(\omega) = \frac{H(\omega)^* \cdot E[|S'(\omega)|^2]}{|H(\omega)|^2 \cdot E[|S'(\omega)|^2] + E[|W(\omega)|^2]} \qquad \text{Expression 22}$$

By obtaining the frequency response R'(ω) for each captured image and for each local area (each pixel) of the captured image, the minimum MSE of the local area can be obtained, and as compared with when the inverse transform processing is performed by the inverse transform filter based on the frequency response R(ω) that is common to the overall captured image, an increase in noise can be suppressed. The local area to obtain the frequency response R'(ω) is not limited to each pixel, and it may be for each given pixel group (a given portion) of the captured image.

Because the frequency response S'(ω) in Expression 22 cannot be obtained directly from the captured image, by using the above-described Expression 9, the average value E[S'(ω)|$^2$] of the local power spectrum of the ideal image is defined as the following Expression 23.

$$E[|S'(\omega)|^2] = E\left[\left|\frac{X'(\omega) - W(\omega)}{H(\omega)}\right|^2\right] \approx E\left[\left|\frac{X'(\omega)}{H(\omega)}\right|^2\right] \qquad \text{Expression 23}$$

The X'(ω) is the frequency response of a local area (pixel) of the captured image, and Expression 23 takes an approximation from the relation of X'(ω)>>W(ω). That is, the noise component of the captured image is assumed to be substantially smaller than the pixel. When the frequency response R(ω) of the inverse transform filter that yields the minimum MSE of the frequency response X(ω) is used for the frequency response S(ω), the average value E[|S'(ω)|$^2$] is expressed, to be more precise, by the following Expression 24.

$$E[|S'(\omega)|^2] \approx E[|R(\omega)X'(\omega)|^2] \qquad \text{Expression 24}$$

Next, the model of noise is considered as follows. Considering that the noise in the captured image has the noise that has steady amplitude regardless of pixel and the noise that has amplitude proportional to the pixel, the noise in the captured image is defined as the following Expression 25.

$$E[|w(n)|^2] = E[|kx(n)|^2 + |c|^2] = E[k^2|x(n)|^2 + |c|^2] \qquad \text{Expression 25}$$

The k is a proportionality constant of the noise that has the amplitude proportional to the pixel of the captured image, and the c is the noise component that has steady amplitude independent of each pixel of the captured image. By the Parseval's theorem, transforming Expression 25 in frequency domain produces the following Expression 26.

$$E[|W(\omega)|^2] = E[k^2|X(\omega)|^2 + |c|^2] \qquad \text{Expression 26}$$

Substituting the above-described Expression 24 and Expression 26 into Expression 22 can obtain the following Expression 27.

$$R'(\omega) = \frac{H(\omega)^* \cdot E[|R(\omega)X'(\omega)|^2]}{|H(\omega)|^2 \cdot E[|R(\omega)X'(\omega)|^2] + E[k^2|X(\omega)|^2 + |c|^2]} \qquad \text{Expression 27}$$

The k and c can be obtained by analyzing the captured image of a grayscale chart, and by using the analyzed values, the frequency response R'($\omega$) for the local inverse transform filter that yields the minimum MSE can be obtained.

In the actual circuit implementation, it can be implemented by directly calculating the frequency response R'($\omega$) of the foregoing local inverse transform filter for each pixel. However, because the computational load in obtaining the local inverse transform filter is large, the computational load can be reduced by using the following method. In the following description, the component of $k^2|x(n)|^2$ that is the noise having the amplitude proportional to the pixel of the captured image expressed in Expression 25 is omitted. However, by adding this term to the power spectrum of the noise $|W(\omega)|^2$ in the expression to be derived, the effect of the term can be obtained.

First, Expression 22 is modified as in the following Expression 28.

$$R'(\omega) = \frac{H(\omega)^*}{|H(\omega)|^2 + \cdot E[\frac{|W(\omega)|^2}{|S'(\omega)|^2}]} \qquad \text{Expression 28}$$

When the ratio of the frequency response R'($\omega$) of the local inverse transform filter and the frequency response R($\omega$) of the inverse transform filter is defined as K($\omega$), the ratio K($\omega$) is expressed by the following Expression 29.

$$K(\omega) = \frac{R'(\omega)}{R(\omega)} = \frac{\frac{|H(\omega)|^2}{E[|W(\omega)|^2]} + E[\frac{1}{|S(\omega)|^2}]}{\frac{|H(\omega)|^2}{E[|W(\omega)|^2]} + E[\frac{1}{|S'(\omega)|^2}]} \qquad \text{Expression 29}$$

Then, considering that the frequency response R'($\omega$) of the local inverse transform filter is obtained by the frequency response R($\omega$) obtained in advance and the K($\omega$) expressed by Expression 29, the frequency response R'($\omega$) can be obtained by the following Expression 30.

$$R'(\omega) = K(\omega)R(\omega) \qquad \text{Expression 30}$$

That is, by applying the inverse transform filter based on the frequency response R($\omega$) obtained in advance and a filter (hereinafter, referred to as a correction filter) based on the response of K($\omega$) in series, the filter processing equivalent to that by the local inverse transform filter based on the frequency response R'($\omega$) can be performed.

To simplify the expression, A($\omega$) is defined as expressed in the following Expression 31.

$$A(\omega) = \frac{|H(\omega)|^2}{E[|W(\omega)|^2]} \qquad \text{Expression 31}$$

When Expression 31 is substituted into the above-described Expression 29, the frequency response K($\omega$) of the correction filter can be obtained by the following Expression 32.

$$K(\omega) = \frac{R'(\omega)}{R(\omega)} = \frac{A(\omega) + E[\frac{1}{|S(\omega)|^2}]}{A(\omega) + E[\frac{1}{|S'(\omega)|^2}]} \qquad \text{Expression 32}$$

When the noise is assumed to be large and when $A(\omega) << E[1/|S'(\omega)|^2]$ and $A(\omega) << E[1/|S(\omega)|^2]$ are assumed, Expression 32 is simplified and expressed as in the following Expression 33.

$$K(\omega) = \frac{R'(\omega)}{R(\omega)} = \frac{E\left[\frac{1}{|S(\omega)|^2}\right]}{E\left[\frac{1}{|S'(\omega)|^2}\right]} = \frac{E[|S'(\omega)|^2]}{E[|S(\omega)|^2]}$$

Expression 33

Furthermore, when the typical spectrum of the subject is assumed to be of uniform distribution and $E[|S(\omega)|^2]$ =1 is assumed, Expression 33 is further simplified and expressed as in the following Expression 34.

$$K(\omega) = \frac{R'(\omega)}{R(\omega)} = E[|S'(\omega)|^2]$$

Expression 34

In practice, considering the case in which $A(\omega) << E[1/|S'(\omega)|^2]$ and $A(\omega) << E[1/|S(\omega)|^2]$ do not hold true, the frequency response $K(\omega)$ can be expressed as in the following Expression 35 by introducing a proportionality coefficient t.

$$K(\omega) = \frac{R'(\omega)}{R(\omega)} = t \cdot E[|S'(\omega)|^2]$$

Expression 35

The average value $E[|S'(\omega)|^2]$ of the local power spectrum of the ideal image in Expression 32 to Expression 35 for the calculation of the frequency response $K(\omega)$ of the correction filter can be obtained by the above-described Expression 24.

As in the foregoing, because the frequency response $R'(\omega)$ of the local inverse transform filter can be obtained by the multiplication of the frequency response $R(\omega)$ of the inverse transform filter obtained in advance and the frequency response $K(\omega)$ of the correction filter calculated by Expression 32 to Expression 35, the computational load can be reduced.

Configuration and Operation of Filter Processing Unit

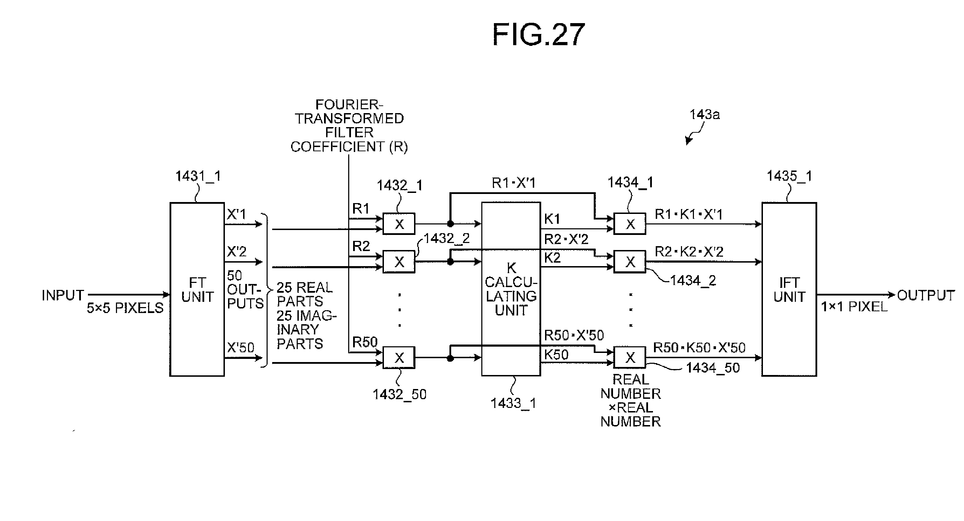

FIG. 27 is a block diagram for explaining one example of the configuration and operation of the filter processing unit of the image processing unit in the second embodiment. With reference to FIG. 27, the configuration and operation of the filter processing unit 143a of the image processing unit 14 will be described.

The filter processing unit 143a (inverse transform processing unit) includes, as illustrated in FIG. 27, a Fourier transform (FT) unit 1431_1, multipliers 1432_1 to 1432_50, a K calculating unit 1433_1, multipliers 1434_1 to 1434_50, and an inverse Fourier transform (IFT) unit 1435_1.

The FT unit 1431_1 receives an input of pixels of five by five, for example, and by performing Fourier transform, transforms the pixels in frequency domain. As a result, the FT unit 1431_1 transforms the pixels of 5 by 5, that is, 25 pieces of data, into 25 pieces of complex numbers, and outputs 25 pieces of real part data and 25 pieces of imaginary part data (collectively described as data X'1 to X'50).

The multipliers 1432_1 to 1432_50 multiply and output two pieces of data received. The same applies to the multipliers 1434_1 to 1434_50.

The K calculating unit 1433_1 outputs, based on the above-described Expression 24 and any one of Expression 32 to Expression 35, the frequency response $K(o)$ of the correction filter from the product of the frequency response $R(\omega)$ multiplied by the frequency response $X'(\omega)$ received. The K calculating unit 1433_1 may obtain the frequency response $K(\omega)$ by referring to a lookup table in which the value of the frequency response $K(\omega)$ and the product of the frequency response $R(\omega)$ multiplied by the frequency response $X'(\omega)$, that is, the frequency response $S'(\omega)$ are associated with each other.

The IFT unit 1435_1 performs inverse Fourier transform in which the products (values in frequency domain) output from the multipliers 1434_1 to 1434_50 are transformed to values in the real space and outputs a pixel of one by one. The pixel output from the IFT unit 1435_1 is the pixel in which the inverse transform processing by the inverse transform filter based on the frequency response $R'(\omega)$ was performed on the five by five pixels of the captured image.

Next, a series of operations of the filter processing unit 143a will be described. First, an image captured by the imaging element 12 is buffered by the image buffering unit 141 as in the foregoing, and five pixels are output from the image buffering unit 141. Consequently, the FT unit 1431_1 of the filter processing unit 143a is configured to receive pixels of five by five as a unit from the image buffering unit 141. The FT unit 1431_1, by performing Fourier transform based on the received pixels of five by five, transforms the pixels in frequency domain and transforms the pixels into 25 complex numbers, and outputs the data X'1 to X'50 that are 25 pieces of real part data and 25 pieces of imaginary part data.

Next, the multiplier 1432_1 receives an input of the data X'1 output from the FT unit 1431_1 and a filter coefficient R1 that is derived from the frequency response $R(\omega)$ of the inverse transform filter and corresponds to the data X'1. The multiplier 1432_1 multiplies the data X'1 by the filter coefficient R1, and outputs the product R1.X'1. In the same manner, the multipliers 1432_2 to 1432_50 receive the input of the data X'2 to X'50 output from the FT unit 1431_1 and filter coefficients R2 to R50, and output products $R2 \cdot X'2$ to $R50 \cdot X'50$, respectively.

Next, the K calculating unit 1433_1 calculates, based on the above-described Expression 24 and any one of Expression 32 to Expression 35, filter coefficients K1 to K50 that are the coefficients of the respective correction filters based on the frequency response $K(\omega)$ from the received products $R1 \cdot X'1$ to $R50 \cdot X'50$.

Next, the multiplier 1434_1 multiplies the product $R1 \cdot X'1$ output from the multiplier 1432_1 by the filter coefficient K1 output from the K calculating unit 1433_1, and outputs data $R1 \cdot K1 \cdot X'1$. In the same manner, the multipliers 1434_2 to 1434_50 multiply the products $R2 \cdot X'2$ to $R50 \cdot X'50$ output from the multipliers 1432_2 to 1432_50 by the filter coefficients K2 to K50 output from the K calculating unit 1433_1, and output data $R2 \cdot K2 \cdot X'2$ to $R50 \cdot K50 \cdot X'50$, respectively.

The IFT unit 1435_1 then performs, based on the data $R1 \cdot K1 \cdot X'1$ to $R50 \cdot K50 \cdot X'50$ output from the respective multipliers 1434_1 to 1434_50, inverse Fourier transform that transforms data into values in the real space, and outputs a pixel of one by one. As in the foregoing, the pixel output from the IFT unit 1435_1 is the pixel in which the inverse transform processing by the inverse transform filter based on the frequency response $R'(\omega)$ corresponding to the central pixel of the five by five pixels was performed on the pixels in a partial image of five by five pixels of the captured image.

As in the foregoing, also by the filter processing unit 143a, by performing the inverse transform processing by the inverse transform filter based on the frequency response $R'(\omega)$ of the above-described local inverse transform filter, the depth of field is extended in the optical axis direction of the lens unit 11 at each position of the in-focus plane 50 being stretched in the optical axis direction of the lens unit 11. Consequently, the area to be in focus is extended in the optical axis direction of the lens unit 11 and the in-focus area 51 (see FIGS. 20A and 20B) is formed. Then, as long as a subject is included within the in-focus area 51, even when the subject is of a given size, an image of the subject can be captured in a state of the subject being in-focus overall. Furthermore, in a wide range in the optical axis direction of the lens unit 11, a captured image in which the subject is in focus overall can be obtained.

Moreover, the frequency response $R'(\omega)$ of the inverse transform filter is to be obtained for each image captured by the imaging element 12 and each local area (each pixel) of the captured image. By performing the inverse transform processing for each local area (each pixel) by the inverse transform filter based on the frequency response $R'(\omega)$, the minimum mean square error (MSE) of the local area can be obtained, and as compared with when the inverse transform processing is performed by the inverse transform filter based on the frequency response $R(\omega)$ that is common to the overall captured image, an increase in noise can be suppressed.

The frequency response $R'(\omega)$ of the local inverse transform filter is defined as $K(\omega) \cdot R(\omega)$ as expressed in the above-described Expression 30, and the filter circuit is to be configured separately for the processing of the inverse transform filter based on the frequency response $R(\omega)$ and the processing of the correction filter based on the frequency response $K(\omega)$. Furthermore, the circuit to derive the frequency response $K(\omega)$ is to be configured based on the computational expressions expressed by the above-described Expression 32 to Expression 35. Consequently, as compared with when the frequency response $R'(\omega)$ is derived directly for each pixel, the computational load can be reduced and the filter circuit to implement can be simplified.

While it is described, with reference to FIGS. 11 and 27, that the image buffering unit 141 outputs five pixels and the filter processing unit 143a receives the input of five by five pixels and performs the inverse transform processing for which the number of taps is five by five, it is not limited to this. That is, the number of taps in the inverse transform processing may be a different number of taps such as 3 by 3, 11 by 11, or 21 by 21. In this case, to make the central pixel present in the pixel group that is the target of the inverse transform processing by the filter and is input to the filter processing unit 143a, the number of taps of the filter needs to be an odd number.

Modification of Second Embodiment

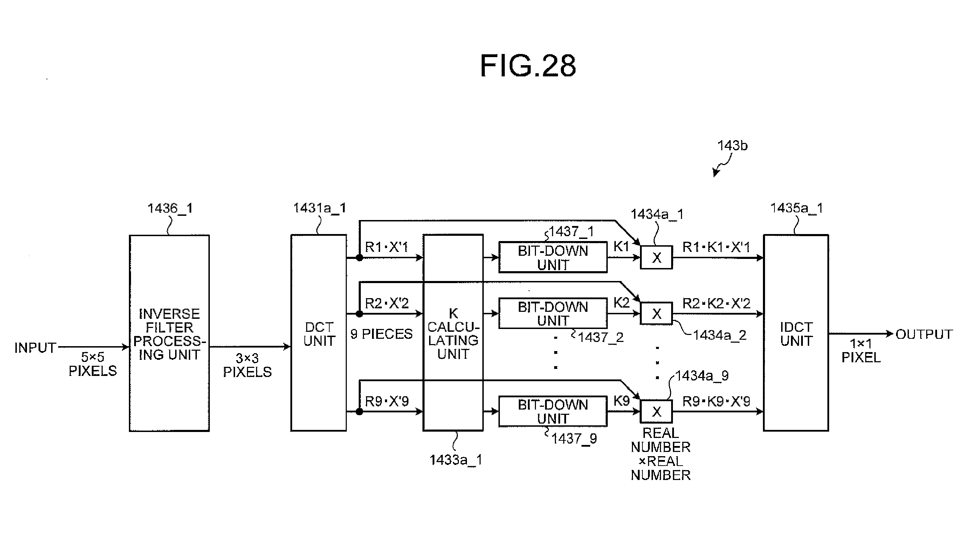

An image capturing apparatus according to a modification of the second embodiment will be described with a focus on the points different from the configuration and operation of the image capturing apparatus in the second embodiment. In the present modification, the filter processing unit 143a of the image processing unit 14 illustrated in FIG. 27 is replaced with a later-described filter processing unit 143b illustrated in FIG. 28.

FIG. 28 is a block diagram for explaining one example of the configuration and operation of a filter processing unit of the image processing unit in the modification of the second embodiment. With reference to FIGS. 28 and 14 to 16F, the configuration and operation of the filter processing unit 143b of the image processing unit 14 will be described.

The filter processing unit 143b (inverse transform processing unit) includes, as illustrated in FIG. 28, an inverse filter processing unit 1436_1, a discrete cosine transform (DCT) unit 1431a_1, a K calculating unit 1433a_1, bit-down units 1437_1 to 1437_9, multipliers 1434a_1 to 1434a_9, and an inverse discrete cosine transform (IDCT) unit 1435a_1.

The inverse filter processing unit 1436_1 receives an input of five by five pixels and performs inverse transform processing by an inverse transform filter based on the frequency response R(co) derived by the above-described Expression 12, for example.

The DCT unit 1431a_1, for example, on the image on which the inverse transform processing has been performed by the inverse filter processing unit 1436_1, receives an input of three by three pixels, performs discrete cosine transform, and transforms the input in frequency domain. As a result, the DCT unit 1431a_1 transforms the three by three pixels, that is, nine pieces of data, into nine values in frequency domain and outputs those values. In the present modification, because the pixels of three by three input to the DCT unit 1431a_1 are the pixels on which the inverse transform processing by the inverse transform filter based on the frequency response $R(\omega)$ has been performed by the inverse filter processing unit 1436_1, the nine values in frequency domain output by the DCT unit 1431a_1 are described as products $R1 \cdot X'1$ to $R9 \cdot X'9$.

The K calculating unit 1433a_1 outputs, based on the above-described Expression 24 and any one of Expression 32 to Expression 35, the frequency response $K(\omega)$ of the correction filter from the product of the frequency response $R(\omega)$ multiplied by the frequency response $X'(\omega)$ received. Specifically, the K calculating unit 1433a_1 calculates, based on the above-described Expression 24 and any one of Expression 32 to Expression 35 from the received products $R1 \cdot X'1$ to $R9 \cdot X'9$, the filter coefficients K1 to K9 that are the coefficients of the respective correction filters based on the frequency response $K(\omega)$. The K calculating unit 1433a_1 may obtain the frequency response $K(\omega)$ by referring to a lookup table in which the value of the frequency response $K(\omega)$ and the values of the frequency response $R(\omega)$ and the frequency response $X'(\omega)$ are associated with each other.

The bit-down units 1437_1 to 1437_9 each reduce a quantization bit rate of the respective filter coefficients K1 to K9 output from the K calculating unit 1433a_1. This is because, even when the filter processing is performed by the correction filter by reducing the quantization bit rate, it has little effect on the degradation of image. Consequently, by reducing the quantization bit rate of the filter coefficients K1 to K9 by the bit-down units 1437_1 to 1437_9, the computational load by the multipliers 1434a_1 to 1434a_9 in a downstream stage can be reduced.

The multipliers 1434a_1 to 1434a_9 multiply and output two pieces of data received.

The IDCT unit 1435a_1 performs inverse discrete cosine transform in which the products (values in frequency domain) output from the multipliers 1434a_1 to 1434a_9 are transformed into values in the real space and outputs a pixel of one by one. The pixel output from the IDCT unit 1435a_1 is the pixel in which the inverse transform processing by the inverse transform filter based on the frequency response $R'(\omega)$ was performed on the five by five pixels of the captured image.

Next, a series of operations of the filter processing unit 143b will be described. First, an image captured by the imaging element 12 is buffered by the image buffering unit 141 as in the foregoing, and five pixels are output from the image buffering unit 141. Consequently, the inverse filter processing unit 1436_1 of the filter processing unit 143b is configured to receive pixels of five by five as a unit from the image buffering unit 141. The details of operation in inverse transform processing by the inverse transform filter based on the frequency response $R(\omega)$ performed in the inverse filter processing unit 1436_1 will be described with reference to FIGS. 14 to 16.

The filter used in the inverse transform processing is assumed to be, as illustrated in FIG. 14, an inverse transform filter 121 that is a linear filter having taps of five by five and composed of filter coefficients a11 to a15, a21 to a25, a31 to a35, a41 to a45, and a51 to a55. Furthermore, the portion of an image that is a target of inverse transform processing by the inverse transform filter 121 is assumed to be a target partial image 131 illustrated in FIG. 15. The target partial image 131 is a partial image having pixels of five by five and composed of pixels A11 to A15, A21 to A25, A31 to A35, A41 to A45, and A51 to A55.

As illustrated in FIG. 15, the inverse transform processing by the inverse transform filter is the calculated value of convolution performed on the target partial image 131 by the inverse transform filter 121, that is, the calculated value expressed by Expression 1. The calculated value of convolution is the value of inverse transform processing performed on the central data that is the pixel located in the center of the target partial image 131. That is, the calculated value of convolution is, in the image after the inverse transform processing, the pixel at the location equivalent to the central data of the image before the inverse transform processing.

Next, on the inverse transform processing of the inverse filter processing unit 1436_1, the outline of operation performed in the inverse transform processing while a horizontal line in the X direction of the image 105 is scanned will be described, with reference to FIG. 16. The part (a) of FIG. 16 illustrates a state in which the inverse filter processing unit 1436_1 performs the inverse transform processing on the pixel (1, 1) of the image 105 by the inverse transform filter 121. As illustrated in the part (a) of FIG. 16, to perform a convolution calculation on the pixel (1, 1) as central data 135a, the target partial image 131a in which the pixel (1, 1) is the central data 135a and the pixels in the portion overlapping the image 105 are required. That is, of the target partial image 131a, the pixels equivalent to the pixels A33 to A35, A43 to A45, and A53 to A55 of the target partial image 131 illustrated in FIG. 15 are necessary.

That necessitates that the pixels equivalent to the pixels A33 to A35, A43 to A45, and A53 to A55 are output from the output portions 1413a to 1413c of the image buffering unit 141. In the target partial image 131a, the pixels of the portion not overlapping the image 105 are to be handled as "0".

In the above-described state, the inverse filter processing unit 1436_1 performs, in the same manner as the convolution calculation illustrated in FIG. 15, a convolution calculation on the target partial image 131a by the inverse transform filter 121. The inverse filter processing unit 1436_1 outputs, as the pixel (1, 1) of the image after the inverse transform processing, the value of convolution calculation performed on the pixel (1,1) that is the central data 135a in the target partial image 131a of the image 105.

Next, as illustrated in the part (b) of FIG. 16, the inverse filter processing unit 1436_1 shifts the pixel to be the target of convolution calculation by one in the X direction, and performs the inverse transform processing on the pixel (2, 1) that is the central data 135b in the target partial image 131b. The inverse filter processing unit 1436_1 then repeats the convolution calculation while shifting in the X direction on the horizontal line, and as illustrated in the part (c) of FIG. 16, performs the inverse transform processing on the pixel (640, 1) that is the last pixel of the horizontal line in the X direction. As illustrated in the part (c) of FIG. 16, the pixel (640, 1) is the central data 135c of the target partial image 131c.

As in the foregoing, the inverse filter processing unit 1436_1 repeats the convolution calculation while shifting in the X direction on a horizontal line, and when the inverse transform processing on the last pixel of the horizontal line is finished, the filter processing unit 143 performs the inverse transform processing in the same manner on a subsequent horizontal line in the Y direction.

The parts (d) to (f) of FIG. 16 illustrate a state in which the inverse filter processing unit 1436_1 performs the inverse transform processing on the pixels of the fourth horizontal line in the Y direction in the image 105. The part (d) of FIG. 16 illustrates a state in which the inverse filter processing unit 1436_1 performs the inverse transform processing on the pixel (1, 4) of the image 105 by the inverse transform filter 121. As illustrated in the part (d) of FIG. 16, to perform a convolution calculation on the pixel (1, 4) as the central data 135d, the target partial image 131d in which the pixel (1, 4) is the central data and the pixels in the portion overlapping the image 105 are required. In the target partial image 131d, the pixels of the portion not overlapping the image 105 are to be handled as "0" in the same manner as described above.

The part (e) of FIG. 16 illustrates a state in which the inverse filter processing unit 1436_1 performs the inverse transform processing on the pixel (5, 4) of the image 105 by the inverse transform filter 121. As illustrated in the part (e) of FIG. 16, because the whole of the target partial image 131e in which the pixel (5, 4) is the central data 135e is overlapping the image 105, the inverse filter processing unit 1436_1 can perform the inverse transform processing by using all of the pixels included in the target partial image 131e.

The inverse filter processing unit 1436_1 then repeats the convolution calculation while shifting in the X direction on the horizontal line, and as illustrated in the part (f) of FIG. 16, performs the inverse transform processing on the pixel (640, 4) that is the last pixel of the horizontal line in the X direction. As illustrated in the part (f) of FIG. 16, the pixel (640, 4) is the central data 135f of the target partial image 131f.

Next, on the image on which the inverse transform processing has been performed by the inverse filter processing unit 1436_1 as in the foregoing, the DCT unit 1431a_1, for example, receives an input of three by three pixels, performs discrete cosine transform, transforms the input in frequency domain, and outputs the products R1·X'1 to R9·X'9 that are the nine values in frequency domain. As in the foregoing, in the transformation in frequency domain performed by the DCT unit 1431a_1, the number of data output is the same as the number of data input, while the number of data output after the transformation in frequency domain performed by the FT unit 1431_1 illustrated in FIG. 27 in the second embodiment is twice the number of data input. Thus, the circuit in a downstream stage of the DCT unit 1431a_1 can be simplified. Naturally, instead of the DCT unit 1431a_1 and the IDCT unit 1435a_1, an FT unit and an IFT unit, respectively, may be used as the same as those illustrated in the second embodiment.

Next, the K calculating unit 1433a_1 calculates, based on the above-described Expression 24 and any one of Expression 32 to Expression 35, the filter coefficients K1 to K9 that are the coefficients of the respective correction filters based on the frequency response K(ω) from the received products R1·X'1 to R9·X'9.

The bit-down units 1437_1 to 1437_9 reduce the quantization bit rate of the respective filter coefficients K1 to K9 output from the K calculating unit 1433a_1 and output the respective filter coefficients K1 to K9 for which the quantization bit rate has been reduced.

Next, the multipliers 1434a_1 to 1434a_9 multiply the products R1·X'1 to R9·X'9 output from the DCT unit 1431a_1 by the filter coefficients K1 to K9 output from the bit-down units 1437_1 to 1437_9, respectively, and output the respective data R1·K1·X'1 to R9·K9·X'9.

The IDCT unit 1435a_1 then performs, based on the data R1·K1·X'1 to R9·K9·X'9 output from the respective multipliers 1434a_1 to 1434a_9, inverse discrete cosine transform that transforms the data into values in the real space, and outputs a pixel of one by one. As in the foregoing, the pixel output from the IDCT unit 1435a_1 is the pixel in which the inverse transform processing by the inverse transform filter based on the frequency response R'(ω) corresponding to the central pixel of the five by five pixels was performed on the pixels in a partial image of five by five pixels of the captured image.

As described above, the configuration of the filter processing unit 143b of the image processing unit 14 is configured as illustrated in FIG. 28, and this yields the same effect as that in the second embodiment.

In the filter processing unit 143b illustrated in FIG. 28, after the inverse transform processing by the inverse transform filter based on the frequency response $R(\omega)$ is performed on the five by five pixels of the captured image by the inverse filter processing unit 1436_1, from the image on which the inverse transform processing has been performed, the filter processing by the correction filter of the DCT unit 1431a_1 and subsequent units is performed on the three by three pixels for which the number of pixels is reduced. That is, the number of taps of the correction filter is made to be smaller than the number of taps of the inverse transform filter based on the frequency response $R(\omega)$. This is because, even when the number of data input to the K calculating unit 1433a_1 to calculate the filter coefficient of the correction filter by the K calculating unit 1433a_1 is reduced, it has little effect on the degradation of image. This can further simplify the filter circuit to implement.

While the quantization bit rate of the filter coefficient output by the K calculating unit 1433a_1 is reduced by the bit-down units 1437_1 to 1437_9, this is not essential and the bit-down units 1437_1 to 1437_9 do not necessarily need to be provided. Moreover, the bit-down units can be applied to the filter processing unit 143a in the second embodiment, and can be provided on a downstream side of the K calculating unit 1433_1 in the filter processing unit 143a.

Third Embodiment

In a third embodiment, a situation in which the image capturing apparatus in the first or the second embodiment is applied to a code reader will be described. Consequently, the configuration and operation of the code reader according to the third embodiment are the same as those of the image capturing apparatus in the first or the second embodiment.

Configuration and Operation of Code Reader

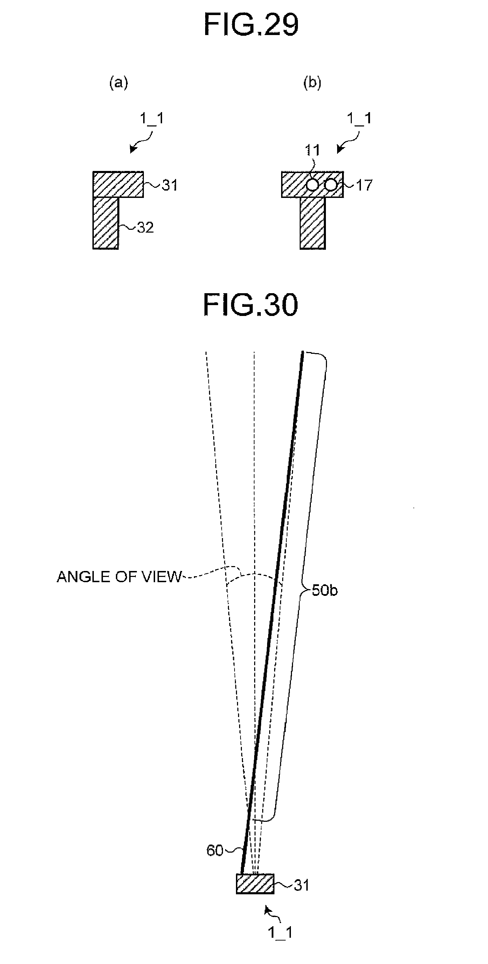

FIG. 29 is a diagram illustrating one example of the external configuration of the code reader in the third embodiment. FIG. 30 is a diagram for explaining the position of an in-focus plane of the code reader in the third embodiment, and the operation of the code reader. With reference to FIGS. 29 and 30, the configuration and operation of a code reader 1_1 as an image capturing apparatus in the third embodiment will be described. Of the parts (a) and (b) of FIG. 29, the part (a) is a side view of the code reader 1_1, and the part (b) is a plan view of the code reader 1_1.

The code reader 1_1 is a handy-type device that captures an image of (reads) a barcode or two-dimensional code and the like as a subject. As illustrated in the part (a) of FIG. 29, the code reader 1_1 includes a head 31, and a handle 32. The head 31, as illustrated in the part (b) of FIG. 29, includes the lens unit 11 that focuses light from a subject and forms an image on the imaging element 12 (not depicted), and the light source 17 that emits the light beam 60. The handle 32 is a portion that the user holds, and includes an operating button (not depicted) to be a trigger to capture an image of a subject of a barcode or two-dimensional code and the like (code) in which information is encoded in a given method.

Although not depicted, the imaging element 12 is disposed such that its sensor surface is tilted with respect to the principle surface of the lens unit 11, and thus an in-focus plane 50b (see FIG. 30) is formed for which the in-focus position is stretched in the optical axis direction of the lens unit 11 by the Scheimpflug principle. The light source 17 emits the light beam 60, as illustrated in FIG. 30, such that the direction of the light beam 60 emitted is displaced from the central axis direction of the angle of view of the lens unit 11 and the light beam 60 is positioned on the in-focus plane 50b. The recognition processing unit 15 (not depicted) performs the processing to recognize a barcode or two-dimensional code and the like, based on an image that is a captured image of the barcode or two-dimensional code and the like captured by the imaging element 12 and on which the filter processing has been performed by the image processing unit 14.

By the foregoing configuration, a captured image that is in focus in a wide range in the optical axis direction of the lens unit 11 can be obtained, and the user can easily define an appropriate image capturing position depending on the distance to a subject such as a barcode or two-dimensional code and the like by moving the code reader 1_1 such that the subject is placed at the position indicated by the light beam 60 emitted from the light source 17, and can obtain a captured image that is focused on the subject.

Furthermore, by performing the inverse transform processing by the inverse transform filter by the filter processing unit 143 (143a, 143b) not depicted, the depth of field is extended in the optical axis direction of the lens unit 11 at each position of the in-focus plane 50b being stretched in the optical axis direction of the lens unit 11. Consequently, the area to be in focus is extended in the optical axis direction of the lens unit 11 and the in-focus area is formed. Then, as long as a subject such as a barcode or two-dimensional code and the like is included within the in-focus area, even when the subject is of a given size, an image of the subject can be captured in a state of the subject being in-focus overall. Furthermore, in a wide range in the optical axis direction of the lens unit 11, a captured image in which the barcode or two-dimensional code and the like is in focus overall can be obtained.

While the code reader 1_1 is exemplified as a handy-type device as illustrated in FIG. 29, it is not limited to this and it may be a fixed-type device.

In accordance with the invention, an image of a subject having a given size can be captured being in focus.
Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. An image capturing apparatus (1) comprising:

    an optical system (11) that imparts aberration to incident light;
    an image capturing unit (12) that transforms the light having passed through the optical system (11) to pixels and captures an image; and
    an inverse transforming unit (14) that performs inverse transform processing on a captured image captured by the image capturing unit (12) in a given range on an optical axis of the optical system (11) by an inverse transform filter (121) that restores the aberration so as to extend a depth of field, wherein
    the optical system (11) and the image capturing unit (12) are disposed to form an in-focus plane (50) with an in-focus position stretched in a direction of the optical axis, and
    the inverse transforming unit (14) extends the depth of field at each position of the in-focus plane (50).

2. The image capturing apparatus (1) according to claim 1, wherein
   the in-focus plane (50) is formed by disposing a detection plane of the image capturing unit (12) being inclined with respect to a principle surface of the optical system (11).

3. The image capturing apparatus (1) according to claim 2, wherein
   the detection plane has a longitudinal direction disposed being inclined with respect to the principle surface.

4. The image capturing apparatus (1) according to claim 1, wherein
   the optical system (11) includes a multifocal lens, and
   the image capturing unit (12) has a detection plane disposed being parallel to a principle surface of the optical system (11).

5. The image capturing apparatus (1) according to any one of claims 1 to 4, further comprising a light source (17) that emits a light beam (60) so as to be included in an in-focus area (51) with the depth of field extended at each position of the in-focus plane (50).

6. The image capturing apparatus (1) according to claim 5, wherein
   the light source (17) emits the light beam (60) in a state of having a deformed cross section such that a shape of a pointer of the light beam (60) formed on a subject is in a normal shape when the subject is irradiated with the light beam (60).

7. The image capturing apparatus (1) according to anyone of claims 1 to 6, wherein
   the inverse transform filter (121) is a filter that minimizes a mean square error between a frequency response of a pixel of an ideal image of a subject and a frequency response of a pixel of an output image on which the inverse transform processing is performed by the inverse transforming unit (14).

8. The image capturing apparatus (1) according to any one of claims 1 to 6, wherein
   the inverse transform filter (121) is a filter that minimizes a mean square error between a frequency response of a pixel in a given portion of an ideal image of a subject and a frequency response of a pixel in a given portion of an output image on which the inverse transform processing is performed by the inverse transforming unit (14).

9. The image capturing apparatus (1) according to any one of claims 1 to 8, wherein
   a frequency response of the inverse transform filter (121) is a product of a frequency response of a filter to restore the aberration of a whole of the captured image multiplied by a frequency response of a correction filter that corrects the frequency response of the filter.

10. The image capturing apparatus (1) according to any one of claims 1 to 9, further comprising a recognition processing unit (15) that recognizes a code in which information is encoded in a given method, based on an output image on which the inverse transform processing is performed by the inverse transforming unit (14).

11. An image capturing system comprising:

the image capturing apparatus (1) according to any one of claims 1 to 10; and
an information processing apparatus (2) that comprises: a communication unit (21) that receives an output image on which the inverse transform processing is performed from the image capturing apparatus (1), and a display unit (23) that displays the output image.

12. An image capturing system comprising:

the image capturing apparatus (1) according to any one of claims 1 to 9; and
a recognition processing unit (15) that recognizes a code in which information is encoded in a given method, based on an output image on which the inverse transform processing is performed by the inverse transforming unit (14).

13. An image capturing method for an image capturing apparatus (1) in which an optical system (11) and an image capturing unit (12) are disposed to form an in-focus plane (50) with an in-focus position stretched in an optical axis direction of the optical system (11), the image capturing method comprising:

optical-processing by the optical system (11) to impart aberration to incident light;
image-capturing by the image capturing unit (12) to transform the light having passed through the optical system (11) and to capture an image; and
inverse-transforming to perform inverse transform processing on a captured image captured in a given range on an optical axis of the optical system (11) by an inverse transform filter (121) that restores the aberration so as to extend a depth of field at each position of the in-focus plane (50).

# FIG.1

500

4

1

3

2

IMAGE
CAPTURING
APPARATUS

PC

# FIG.2

2

PC

24
STORAGE
UNIT

25
EXTERNAL
STORAGE
DEVICE

26
CON-
TROLLER

27

COMMU-
NICATION
UNIT
21

OPERAT-
ING UNIT
22

DISPLAY
UNIT
23

# FIG.3

IMAGE CAPTURING APPARATUS

IMAGING ELEMENT

IMAGE PROCESS-ING UNIT

RECOGNITION PROCESSING UNIT

COMMU-NICATION UNIT

LIGHT SOURCE

EP 2 913 992 A2

# FIG.4

# FIG.5

# FIG.6

# FIG.7

# FIG.8

LIGHT BEAM

# FIG.9

# FIG.10

# FIG.11

INPUT PORTION
1410

141

IMAGE BUFFERING UNIT

OUTPUT PORTION
1413a

(X, Y)

(X, Y)

1411a REGIS-TER

1412a

...

1a 2a 3a          639a 640a

(X, Y-1)

1413b
OUTPUT PORTION

1411b REGIS-TER

1412b

...

1b 2b 3b          639b 640b

(X, Y-2)

OUTPUT PORTION
1413c

1411c REGIS-TER

1412c

...

(X, Y-3)

OUTPUT PORTION
1413d

1411d REGIS-TER

1412d

...

(X, Y-4)

OUTPUT PORTION
1413e

# FIG.12

VALID FRAME

DATA

VALID LINE           L1           L2      ...    L480

A    T         B                                C

FRAME START PERIOD

HORIZONTAL BLANKING PERIOD

VALID DATA PERIOD

FRAME END PERIOD

D
VERTICAL BLANKING PERIOD

# FIG.13

EP 2 913 992 A2

FIG.14

INVERSE
TRANSFORM
FILTER
121

| a11 | a12 | a13 | a14 | a15 |
|-----|-----|-----|-----|-----|
| a21 | a22 | a23 | a24 | a25 |
| a31 | a32 | a33 | a34 | a35 |
| a41 | a42 | a43 | a44 | a45 |
| a51 | a52 | a53 | a54 | a55 |

# FIG.15

TARGET PARTIAL IMAGE OF
NORMAL IMAGE

⌐131

| A11 | A12 | A13 | A14 | A15 |
| A21 | A22 | A23 | A24 | A25 |
| A31 | A32 | A33 | A34 | A35 |
| A41 | A42 | A43 | A44 | A45 |
| A51 | A52 | A53 | A54 | A55 |

$*$ (CONVOLU-TION)

INVERSE TRANSFORM FILTER

⌐121

| a11 | a12 | a13 | a14 | a15 |
| a21 | a22 | a23 | a24 | a25 |
| a31 | a32 | a33 | a34 | a35 |
| a41 | a42 | a43 | a44 | a45 |
| a51 | a52 | a53 | a54 | a55 |

$=$

A11×a11+A12×a12+A13×a13+A14×a14+A15×a15
+A21×a21+A22×a22+A23×a23+A24×a24+A25×a25
+A31×a31+A32×a32+A33×a33+A34×a34+A35×a35
+A41×a41+A42×a42+A43×a43+A44×a44+A45×a45
+A51×a51+A52×a52+A53×a53+A54×a54+A55×a55

···EXPRESSION 1

EP 2 913 992 A2

FIG.16

# FIG.17

```
                    ┌─────────────┐
                    │    START    │
                    └─────────────┘
                           │
      ┌────────────────────┼────────────────────┐
      │                    │                     │
      ▼ ⌐S1                ▼ ⌐S3                 ▼ ⌐S4
┌──────────────┐  ┌──────────────────┐  ┌──────────────────┐
│ CALCULATE RAY│  │ DERIVE FREQUENCY │  │ DERIVE FREQUENCY │
│    TRACE     │  │ RESPONSE OF NOISE│  │  RESPONSE OF     │
└──────────────┘  └──────────────────┘  │    SUBJECT       │
      │                                  └──────────────────┘
      ▼ ⌐S2                                      │
┌──────────────┐                                 │
│DERIVE FREQUENCY│                               │
│  RESPONSE OF │                                 │
│OPTICAL SYSTEM│                                 │
└──────────────┘                                 │
      │                                          │
      └──────────────────┐    ┌──────────────────┘
                         ▼    ▼
                    ┌──────────────┐ ⌐S5
                    │  CALCULATE   │
                    │  FREQUENCY   │
                    │ RESPONSE OF  │
                    │    FILTER    │
                    └──────────────┘
                           │
                           ▼
                    ┌─────────────┐
                    │     END     │
                    └─────────────┘
```

# FIG.18

TARGET SPATIAL FREQUENCY RESPONSE
201

SPATIAL FREQUENCY RESPONSE
OF FOCUSED POSITION
202

203
SPATIAL FREQUENCY RESPONSE OF
DEFOCUSED POSITION

# FIG.19

(a)

MTF | SPATIAL FREQUENCY RESPONSE OF FOCUSED POSITION
202a

1

203a
SPATIAL FREQUENCY RESPONSE
OF DEFOCUSED POSITION

0 → SPATIAL FREQUENCY [ω]

(b)

SPATIAL FREQUENCY RESPONSE OF
DEFOCUSED POSITION P1
MTF
202b        201

1

203b
SPATIAL FREQUENCY RESPONSE OF
DEFOCUSED POSITION P2

0 → SPATIAL FREQUENCY [ω]

# FIG.20

(a)

51

50

EXTENDED DEPTH OF FIELD

(b)

51

4g

4e

4f

# FIG.21

(a)

BACK SIDE OF ←--------- FRONT SIDE OF
IN-FOCUS POINT              IN-FOCUS POINT

~12

IN-FOCUS
RANGE

(b)

BACK SIDE OF ←--------- FRONT SIDE OF
IN-FOCUS POINT              IN-FOCUS POINT

~12

IN-FOCUS
RANGE

# FIG.22

# FIG.23

# FIG.24

POWER SPECTRUM OF OVERALL IDEAL IMAGE S ($\omega$)

(a)

SPATIAL FREQUENCY $\omega$

OPTIMAL FILTER FOR OVERALL IDEAL IMAGE R ($\omega$)

(b)

SPATIAL FREQUENCY $\omega$

# FIG.25

POWER SPECTRUM OF AREA 103 S' ($\omega$)

(a)

SPATIAL FREQUENCY $\omega$

OPTIMAL FILTER FOR AREA 103 R' ($\omega$)

(b)

SPATIAL FREQUENCY $\omega$

# FIG.26

POWER SPECTRUM OF AREA 104 S' ($\omega$)

(a)

SPATIAL FREQUENCY $\omega$

OPTIMAL FILTER FOR AREA 104 R' ($\omega$)

(b)

SPATIAL FREQUENCY $\omega$

# FIG.27

FOURIER-
TRANSFORMED
FILTER
COEFFICIENT (R)

143a

INPUT $\longrightarrow$ 5×5 PIXELS

FT
UNIT
1431_1

X'1
X'2
50
OUT-
PUTS
X'50

25 REAL
PARTS
25 IMAG-
INARY
PARTS

R1 $\longrightarrow$ [X] 1432_1
R2 $\longrightarrow$ [X] 1432_2
R50 $\longrightarrow$ [X] 1432_50

R1·X'1

K
CALCU-
LATING
UNIT
1433_1

K1
R2·X'2
K2

R50·X'50
K50

[X] 1434_1
[X] 1434_2
[X] 1434_50

REAL
NUMBER
×REAL
NUMBER

R1·K1·X'1
R2·K2·X'2

R50·K50·X'50

IFT
UNIT
1435_1

$\longrightarrow$ 1×1 PIXEL OUTPUT

EP 2 913 992 A2

# FIG.28

EP 2 913 992 A2

# FIG.29

(a)                                    (b)

1_1                                    11        1_1

31                                              17

32

# FIG.30

ANGLE OF VIEW

50b

60

31

1_1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010152881 A